# EUROPEAN PATENT APPLICATION

(11) **EP 4 518 470 A1**
(43) Date of publication of application: **05.03.2025**
(21) Application number: 22939031.5
(22) Date of filing: 27.04.2022
(51) Int. Cl.: H04W 72/02

(54) **MULTIPLE RADIO ACCESS TECHNOLOGY SIDELINK COMMUNICATION COEXISTENCE METHODS, AND DEVICES THEREFOR**

(71) Applicant: Beijing Xiaomi Mobile Software Co., Ltd., Beijing 100085 (CN)
(72) Inventor: ZHAO, Qun, Beijing 100085 (CN)
(74) Representative: Hersina, Günter
(86) International application number: PCT/CN2022/089677
(87) International publication number: WO 2023/206178

(57) **Abstract**

Disclosed in the embodiments of the present disclosure are multiple radio access technology sidelink communication coexistence methods and devices therefor. A method is executed by a terminal device of second radio access technology sidelink communication (S201); and, according to a channel sensing result of first radio access technology sidelink communication, executing a process of sidelink communication second radio access technology sidelink communication (S202), the process comprising at least one of the following processes: resource selection or resource re-selection, sidelink physical channel sending, re-evaluation of a resource to be used for transmission, occupation evaluation of the resource to be used for transmission, and determination of auxiliary resource set information included in inter-user assistance information. In the present technical solution, the terminal device can execute the process of second radio access technology sidelink communication according to the channel sensing result, avoiding transmission resource collision, dynamically sharing a transmission resource on the same carrier frequency, and improve the use efficiency of the transmission resource.

## Description

### TECHNICAL FIELD

The present disclosure relates to the field of communication technology, in particular to a sidelink communication coexistence method for multiple radio access technologies, and an apparatus thereof.

### BACKGROUND

In the related art, in a case that a New Radio (NR) sidelink and a Long Term Evolution (LTE) sidelink are used by a User Equipment (UE) simultaneously for communication, because the NR sidelink is incompatible with the LTE sidelink, an NR sidelink receiver cannot send or receive an LTE sidelink signal, and the LTE sidelink receiver cannot send or receive an NR sidelink signal. For both the NR sidelink and the LTE sidelink, interference needs to be reduced through resource reservation and channel sensing. Hence, in a case that the same resource is selected by both simultaneously, a transmission resource collision may occur, and thereby the transmission reliability may be adversely affected.

### SUMMARY

The present disclosure provides in some embodiments a sidelink communication coexistence method for multiple radio access technologies and an apparatus thereof, applied to a UE for a sidelink communication of a second radio access technology. The UE executes a procedure of the sidelink communication of the second radio access technology based on a channel sensing result of a sidelink communication of a first radio access technology, so as to enable the sidelink communication of the second radio access technology to avoid a reserved resource for the sidelink communication of the first radio access technology, prevent the occurrence of transmission resource collision, enable the sidelink of the first radio access technology and the sidelink of the second radio access technology to dynamically share transmission resources on the same carrier frequency, and improve the use efficiency of the transmission resources.

In a first aspect, the present disclosure provides in some embodiments a sidelink communication coexistence method of multiple radio access technologies, including: performing a channel sensing on a sidelink communication of a first radio access technology; and executing a procedure of the sidelink communication of the second radio access technology based on a channel sensing result of the sidelink communication of the first radio access technology. The procedure includes at least one of: a resource selection or a resource re-selection; a transmission of a sidelink physical channel; a re-evaluation of a to-be-transmitted resource; an evaluation of preemption of the to-be-transmitted resource; or a determination of auxiliary resource set information in inter-UE coordination information.

In this technical solution, the UE executes the procedure of the sidelink communication of the second radio access technology based on the channel sensing result of the sidelink communication of the first radio access technology, so as to enable the sidelink communication of the second radio access technology to avoid a reserved resource for the sidelink communication of the first radio access technology, prevent the occurrence of transmission resource collision, enable the sidelink of the first radio access technology and the sidelink of the second radio access technology to dynamically share transmission resources on the same carrier frequency, and improve the use efficiency of the transmission resources.

In an embodiment of the present disclosure, the first radio access technology is an LTE radio access technology, and the second radio access technology is an NR radio access technology.

In an embodiment of the present disclosure, the performing the channel sensing on the sidelink communication of the first radio access technology includes at least one of: receiving a Physical Sidelink Control Channel (PSCCH) for the sidelink communication of the first radio access technology; or determining a Sidelink-Reference Signal Receiving Power (S-RSRP) measurement value and/or a Sidelink-Received Signal Strength Indicator (S-RSSI) measurement value corresponding to Sidelink Control Information (SCI) in the PSCCH for the sidelink communication of the first radio access technology.

In an embodiment of the present disclosure, the performing the channel sensing on the sidelink communication of the first radio access technology includes performing the channel sensing in a resource pool for the sidelink communication of the first radio access technology, time/frequency resources in the resource pool for the sidelink communication of the first radio access technology overlap with time/frequency resources in a resource pool for the sidelink communication of the second radio access technology, the resource pool for the sidelink communication of the first radio access technology includes the time/frequency resources for the sidelink communication of the first radio access technology, and the resource pool for the sidelink communication of the second radio access technology includes the time/frequency resources for the sidelink communication of the second radio access technology.

In an embodiment of the present disclosure, the executing the procedure of the sidelink communication of the second radio access technology based on the channel sensing result of the sidelink communication of the first radio access technology includes, in a case that the resource selection or the resource re-selection of the sidelink communication of the second radio access technology is performed, excluding candidate resources from a candidate resource set for the sidelink communication of the second radio access technology based on the channel sensing result of the sidelink communication of the first radio access technology.

In an embodiment of the present disclosure, the excluding the candidate resources from the candidate resource set for the sidelink communication of the second radio access technology based on the channel sensing result of the sidelink communication of the first radio access technology includes: determining time/frequency resources indicated in the SCI for the sidelink communication of the first radio access technology received in the channel sensing or reserved time/frequency resources based on the channel sensing result of the sidelink communication of the first radio access technology; and excluding candidate resources overlapping with the time/frequency resources indicated in the SCI or the reserved time/frequency resources from the candidate resource set for the sidelink communication of the second radio access technology.

In an embodiment of the present disclosure, the excluding candidate resources overlapping with the time/frequency resources indicated in the SCI or the reserved time/frequency resources from the candidate resource set for the sidelink communication of the second radio access technology includes: determining an S-RSRP measurement value and/or an S-RSSI measurement value associated with the SCI; and excluding a first candidate resource from the candidate resource set for the sidelink communication of the second radio access technology. The first candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a first threshold.

In an embodiment of the present disclosure, there is a mapping relation between the first threshold and each of a priority level of the sidelink communication of the first radio access technology and a priority level of the sidelink communication of the second radio access technology indicated in the SCI; and/or the first threshold is configured independent of a second threshold or preconfigured. The second threshold is a threshold used for excluding candidate resources based on a channel sensing result of the sidelink communication of the second radio access technology.

In this technical solution, the UE excludes the candidate resources from the candidate resource set for the NR sidelink communication based on the channel sensing result of the LTE sidelink communication, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

In an embodiment of the present disclosure, the executing the procedure of the sidelink communication of the second radio access technology based on the channel sensing result of the sidelink communication of the first radio access technology includes, in a case that the transmission of the sidelink physical channel for the sidelink communication of the second radio access technology is performed, determining whether or not to transmit the sidelink physical channel for the sidelink communication of the second radio access technology based on the channel sensing result of the sidelink communication of the first radio access technology.

In an embodiment of the present disclosure, the determining whether or not to transmit the sidelink physical channel for the sidelink communication of the second radio access technology based on the channel sensing result of the sidelink communication of the first radio access technology includes: determining time/frequency resources indicated in the SCI for the sidelink communication of the first radio access technology received in the channel sensing or reserved time/frequency resources based on the channel sensing result of the sidelink communication of the first radio access technology; cancelling the transmission of the sidelink physical channel for the sidelink communication of the second radio access technology, the time/frequency resources indicated in the SCI or the reserved time/frequency resources overlapping with time/frequency resources used by a to-be-transmitted sidelink physical channel for the sidelink communication of the second radio access technology; or transmitting the sidelink physical channel for the sidelink communication of the second radio access technology, the time/frequency resources indicated in the SCI or the reserved time/frequency resources not overlapping with the time/frequency resources used by the to-be-transmitted sidelink physical channel for the sidelink communication of the second radio access technology.

In an embodiment of the present disclosure, the determining whether or not to transmit the sidelink physical channel for the sidelink communication of the second radio access technology based on the channel sensing result of the sidelink communication of the first radio access technology includes:

determining an S-RSRP measurement value and/or an S-RSSI measurement value associated with the SCI; in a case that the time/frequency resources indicated in the SCI or the reserved time/frequency resources overlap with the time/frequency resources used by the to-be-transmitted sidelink physical channel for the sidelink communication of the second radio access technology and the S-RSRP measurement value and/or the S-RSSI measurement value associated with the SCI are greater than or equal to a third threshold, cancelling the transmission of the sidelink physical channel for the sidelink communication of the second radio access technology; or in a case that the time/frequency resources indicated in the SCI or the reserved time/frequency resources do not overlap with the time/frequency resources used by the to-be-transmitted sidelink physical channel for the sidelink communication of the second radio access technology and/or the S-RSRP measurement value and/or the S-RSSI measurement value associated with the SCI are smaller than the third threshold, transmitting the sidelink physical channel for the sidelink communication of the second radio access technology.

In an embodiment of the present disclosure, there is mapping relation between the third threshold and each of a priority level of the sidelink communication of the first radio access technology and a priority level of the sidelink communication of the second radio access technology indicated in the SCI.

In this technical solution, the UE determines whether or not to transmit the sidelink physical channel for the NR sidelink communication based on the channel sensing result of the LTE sidelink communication, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

In an embodiment of the present disclosure, the executing the procedure of the sidelink communication of the second radio access technology based on the channel sensing result of the sidelink communication of the first radio access technology includes, in a case that the re-evaluation and/or the evaluation of the preemption of the to-be-transmitted resource for the sidelink communication of the second radio access technology are performed, determining whether or not the resource reselection for the sidelink communication of the second radio access technology is to be performed based on the channel sensing result of the sidelink communication of the first radio access technology.

In an embodiment of the present disclosure, the determining whether or not the resource reselection for the sidelink communication of the second radio access technology is to be performed based on the channel sensing result of the sidelink communication of the first radio access technology includes: determining time/frequency resources indicated in the SCI for the first radio access technology sidelink communication received in the channel sensing or reserved time/frequency resources based on the channel sensing result of the sidelink communication of the first radio access technology; performing the resource reselection on a PSCCH/a Physical Sidelink Shared Channel (PSSCH) for the sidelink communication of the second radio access technology transmitted using the to-be-transmitted resource, the time/frequency resources indicated in the SCI or the reserved time/frequency resources overlapping with the to-be-transmitted resource; or performing transmission of a sidelink of the second radio access technology using the to-be-transmitted resource, the time/frequency resources indicated in the SCI or the reserved time/frequency resources not overlapping with the to-be-transmitted resource.

In an embodiment of the present disclosure, the determining whether or not the resource reselection for the sidelink communication of the second radio access technology is to be performed based on the channel sensing result of the sidelink communication of the first radio access technology further includes: determining an S-RSRP measurement value and/or an S-RSSI measurement value associated with the SCI; in a case that the time/frequency resources indicated in the SCI or the reserved time/frequency resources overlap with the to-be-transmitted resource and the S-RSRP measurement value and/or the S-RSSI measurement value associated with the SCI are greater than or equal to a fourth threshold, performing the resource reselection on the PSCCH/PSSCH for the sidelink communication of the second radio access technology transmitted using the to-be-transmitted resource; or in a case that the time/frequency resources indicated in the SCI or the reserved time/frequency resources do not overlap with the to-be-transmitted resource and/or the S-RSRP measurement value and/or the S-RSSI measurement value associated with the SCI are smaller than the fourth threshold, performing transmission of the second radio access technology sidelink using the to-be-transmitted resource.

In an embodiment of the present disclosure, there is a mapping relation between the fourth threshold and each of a priority level of the sidelink communication of the first radio access technology and a priority level of the transmission of the PSCCH/PSSCH for the sidelink communication of the second radio access technology indicated in the SCI.

In this technical solution, the UE determines whether or not to perform the resource reselection for the NR sidelink communication based on the channel sensing result of the LTE sidelink communication, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

In an embodiment of the present disclosure, the executing the procedure of the sidelink communication of the second radio access technology based on the channel sensing result of the sidelink communication of the first radio access technology includes, in a case that an inter-UE coordination is performed, determining auxiliary resource set information in inter-UE coordination information based on the channel sensing result of the sidelink communication of the first radio access technology.

In an embodiment of the present disclosure, the auxiliary resource set information includes a recommended resource set, and the sidelink communication coexistence method further includes excluding candidate resources from a candidate resource set for the sidelink communication of the second radio access technology based on the channel sensing result of the sidelink communication of the first radio access technology.

In an embodiment of the present disclosure, the excluding candidate resources from the candidate resource set for the sidelink communication of the second radio access technology based on the channel sensing result of the sidelink communication of the first radio access technology includes: determining time/frequency resources indicated in the SCI for the sidelink communication of the first radio access technology received in the channel sensing or reserved time/frequency resources based on the channel sensing result of the sidelink communication of the first radio access technology; and excluding candidate resources overlapping with the time/frequency resources indicated in the SCI or the reserved time/frequency resources from the candidate resource set for the sidelink communication of the second radio access technology.

In an embodiment of the present disclosure, the excluding candidate resources overlapping with the time/frequency resources indicated in the SCI or the reserved time/frequency resources from the candidate resource set for the sidelink communication of the second radio access technology includes: determining an S-RSRP measurement value and/or an S-RSSI measurement value associated with the SCI; and excluding a second candidate resource from the candidate resource set for the sidelink communication of the second radio access technology. The second candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a fifth threshold.

In an embodiment of the present disclosure, there is a mapping relation between the fifth threshold and each of a priority level of the sidelink communication of the first radio access technology and a priority level of the inter-UE coordination for the sidelink communication of the second radio access technology indicated in the SCI; and/or the fifth threshold is configured independent of a sixth threshold or preconfigured, and the sixth threshold is a threshold used for excluding candidate resources based on a channel sensing result of the sidelink communication of the second radio access technology.

In this technical solution, according to the embodiments of the present disclosure, the UE determines whether or not to perform the resource reselection for the NR sidelink communication based on the channel sensing result of the LTE sidelink communication, and excludes the candidate resources from the candidate resource set, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

In an embodiment of the present disclosure, the auxiliary resource set information includes an unrecommended resource set, and the sidelink communication coexistence method further includes determining resources in the unrecommended resource set from the candidate resource set for the sidelink communication of the second radio access technology based on the channel sensing result of the sidelink communication of the first radio access technology.

In an embodiment of the present disclosure, the determining the resources in the unrecommended resource set from the candidate resource set for the sidelink communication of the second radio access technology based on the channel sensing result of the sidelink communication of the first radio access technology includes: determining time/frequency resources indicated in the SCI for the sidelink communication of the first radio access technology received in the channel sensing or reserved time/frequency resources based on the channel sensing result of the sidelink communication of the first radio access technology; and determining a third candidate resource in the candidate resource set for the sidelink communication of the second radio access technology as a resource in the unrecommended resource set. The third candidate resource is a candidate resource overlapping with the time/frequency resources indicated in the SCI or the reserved time/frequency resources.

In an embodiment of the present disclosure, the determining the third candidate resource in the candidate resource set for the sidelink communication of the second radio access technology as the resource in the unrecommended resource set includes: determining an S-RSRP measurement value and/or an S-RSSI measurement value associated with the SCI; and determining a fourth candidate resource in the candidate resource set for the sidelink communication of the second radio access technology as the resource in the unrecommended resource set. The fourth candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a seventh threshold.

In an embodiment of the present disclosure, there is a mapping relation between the seventh threshold and each of a priority level of the sidelink communication of the first radio access technology and a priority level of the inter-UE coordination for the sidelink communication of the second radio access technology indicated in the SCI; and/or the seventh threshold is configured independent of an eighth threshold or preconfigured, and the eighth threshold is a threshold used for determining the resource in the unrecommended resource set based on a channel sensing result of the sidelink communication of the second radio access technology.

In this technical solution, the UE determines whether or not to perform the resource reselection for the NR sidelink communication based on the channel sensing result of the LTE sidelink communication, and determines the resource in the unrecommended resource set from the candidate resource set, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

In a second aspect, the present disclosure provides in some embodiments a sidelink communication coexistence method for multiple radio access technologies, performed by a network device, including transmitting configuration information to a UE. The UE is a UE using a sidelink communication of a second radio access technology, the configuration information includes a threshold configured for the UE, and the threshold is a threshold used by the UE for executing a procedure of the sidelink communication of the second radio access technology based on a channel sensing result of a sidelink communication of a first radio access technology. The procedure includes at least one of: a resource selection or a resource re-selection; a transmission of a sidelink physical channel; a re-evaluation of a to-be-transmitted resource; an evaluation of a preemption of the to-be-transmitted resource; or a determination of auxiliary resource set information in inter-UE coordination information.

In this technical solution, the network side device transmits the configuration information to the UE, so that the UE executes the procedure of the sidelink communication of the second radio access technology based on the configuration information and the channel sensing result of the sidelink communication of the first radio access technology, so as to enable the sidelink communication of the second radio access technology to avoid a reserved resource for the sidelink communication of the first radio access technology, prevent the occurrence of transmission resource collision, enable the sidelink of the first radio access technology and the sidelink of the second radio access technology to dynamically share transmission resources on the same carrier frequency, and improve the use efficiency of the transmission resources.

In a third aspect, the present disclosure provides in some embodiments a communication apparatus, including: a transceiver module configured to perform a channel sensing on a sidelink communication of a first radio access technology; and a processing module configured to execute a procedure of the sidelink communication of the second radio access technology based on a channel sensing result of the sidelink communication of the first radio access technology. The procedure includes at least one of: a resource selection or a resource re-selection; a transmission of a sidelink physical channel; a re-evaluation of a to-be-transmitted resource; an evaluation of a preemption of the to-be-transmitted resource; or a determination of auxiliary resource set information in inter-UE coordination information.

In an embodiment of the present disclosure, the first radio access technology is an LTE radio access technology, and the second radio access technology is an NR radio access technology.

In an embodiment of the present disclosure, the transceiver module is specifically configured to: receive a PSCCH for the sidelink communication of the first radio access technology; or determine an S-RSRP measurement value and/or an S-RSSI measurement value corresponding to SCI in the PSCCH for the sidelink communication of the first radio access technology.

In an embodiment of the present disclosure, the transceiver module is specifically configured to perform the channel sensing in a resource pool for the sidelink communication of the first radio access technology, time/frequency resources in the resource pool for the sidelink communication of the first radio access technology overlap with time/frequency resources in a resource pool for the sidelink communication of the second radio access technology, the resource pool for the sidelink communication of the first radio access technology includes the time/frequency resources for the sidelink communication of the first radio access technology, and the resource pool for the sidelink communication of the second radio access technology includes the time/frequency resources for the sidelink communication of the second radio access technology.

In an embodiment of the present disclosure, the processing module is specifically configured to, in a case that the resource selection or the resource re-selection of the sidelink communication of the second radio access technology is performed, exclude candidate resources from a candidate resource set for the sidelink communication of the second radio access technology based on the channel sensing result of the sidelink communication of the first radio access technology.

In an embodiment of the present disclosure, the processing module is specifically configured to: determine time/frequency resources indicated in the SCI for the sidelink communication of the first radio access technology received in the channel sensing or reserved time/frequency resources based on the channel sensing result of the sidelink communication of the first radio access technology; and exclude candidate resources overlapping with the time/frequency resources indicated in the SCI or the reserved time/frequency resources from the candidate resource set for the sidelink communication of the second radio access technology.

In an embodiment of the present disclosure, the processing module is specifically configured to: determine an S-RSRP measurement value and/or an S-RSSI measurement value associated with the SCI; and exclude a first candidate resource from the candidate resource set for the sidelink communication of the second radio access technology. The first candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a first threshold.

In an embodiment of the present disclosure, there is a mapping relation between the first threshold and each of a priority level of the sidelink communication of the first radio access technology and a priority level of the sidelink communication of the second radio access technology indicated in the SCI; and/or the first threshold is configured independent of a second threshold or preconfigured. The second threshold is a threshold used for excluding candidate resources based on a channel sensing result of the sidelink communication of the second radio access technology.

In an embodiment of the present disclosure, the processing module is specifically configured to, in a case that the transmission of the sidelink physical channel for the sidelink communication of the second radio access technology is performed, determine whether or not to transmit the sidelink physical channel for the sidelink communication of the second radio access technology based on the channel sensing result of the sidelink communication of the first radio access technology.

In an embodiment of the present disclosure, the processing module is specifically configured to: determine time/frequency resources indicated in the SCI for the sidelink communication of the first radio access technology received in the channel sensing or reserved time/frequency resources based on the channel sensing result of the sidelink communication of the first radio access technology; cancel the transmission of the sidelink physical channel for the sidelink communication of the second radio access technology, the time/frequency resources indicated in the SCI or the reserved time/frequency resources overlapping with time/frequency resources used by a to-be-transmitted sidelink physical channel for the sidelink communication of the second radio access technology; or transmit the sidelink physical channel for the sidelink communication of the second radio access technology, the time/frequency resources indicated in the SCI or the reserved time/frequency resources not overlapping with the time/frequency resources used by the to-be-transmitted sidelink physical channel for the sidelink communication of the second radio access technology.

In an embodiment of the present disclosure, the processing module is specifically configured to: determine an S-RSRP measurement value and/or an S-RSSI measurement value associated with the SCI; in a case that the time/frequency resources indicated in the SCI or the reserved time/frequency resources overlap with the time/frequency resources used by the to-be-transmitted sidelink physical channel for the sidelink communication of the second radio access technology and the S-RSRP measurement value and/or the S-RSSI measurement value associated with the SCI are greater than or equal to a third threshold, cancel the transmission of the sidelink physical channel for the sidelink communication of the second radio access technology; or in a case that the time/frequency resources indicated in the SCI or the reserved time/frequency resources do not overlap with the time/frequency resources used by the to-be-transmitted sidelink physical channel for the sidelink communication of the second radio access technology and/or the S-RSRP measurement value and/or the S-RSSI measurement value associated with the SCI are smaller than the third threshold, transmit the sidelink physical channel for the sidelink communication of the second radio access technology.

In an embodiment of the present disclosure, there is mapping relation between the third threshold and each of a priority level of the sidelink communication of the first radio access technology and a priority level of the sidelink communication of the second radio access technology indicated in the SCI.

In an embodiment of the present disclosure, the processing module is specifically configured to, in a case that the re-evaluation and/or the evaluation of the preemption of the to-be-transmitted resource for the sidelink communication of the second radio access technology are performed, determine whether or not the resource reselection for the sidelink communication of the second radio access technology is to be performed based on the channel sensing result of the sidelink communication of the first radio access technology.

In an embodiment of the present disclosure, the processing module is specifically configured to: determine time/frequency resources indicated in the SCI for the first radio access technology sidelink communication received in the channel sensing or reserved time/frequency resources based on the channel sensing result of the sidelink communication of the first radio access technology; perform the resource reselection on a PSCCH/a PSSCH for the sidelink communication of the second radio access technology transmitted using the to-be-transmitted resource, the time/frequency resources indicated in the SCI or the reserved time/frequency resources overlapping with the to-be-transmitted resource; or perform transmission of a sidelink of the second radio access technology using the to-be-transmitted resource, the time/frequency resources indicated in the SCI or the reserved time/frequency resources not overlapping with the to-be-transmitted resource.

In an embodiment of the present disclosure, the processing module is specifically configured to: determine an S-RSRP measurement value and/or an S-RSSI measurement value associated with the SCI; in a case that the time/frequency resources indicated in the SCI or the reserved time/frequency resources overlap with the to-be-transmitted resource and the S-RSRP measurement value and/or the S-RSSI measurement value associated with the SCI are greater than or equal to a fourth threshold, perform the resource reselection on the PSCCH/PSSCH for the sidelink communication of the second radio access technology transmitted using the to-be-transmitted resource; or in a case that the time/frequency resources indicated in the SCI or the reserved time/frequency resources do not overlap with the to-be-transmitted resource and/or the S-RSRP measurement value and/or the S-RSSI measurement value associated with the SCI are smaller than the fourth threshold, perform transmission of the second radio access technology sidelink using the to-be-transmitted resource.

In an embodiment of the present disclosure, there is a mapping relation between the fourth threshold and each of a priority level of the sidelink communication of the first radio access technology and a priority level of the transmission of the PSCCH/PSSCH for the sidelink communication of the second radio access technology indicated in the SCI.

In an embodiment of the present disclosure, the processing module is specifically configured to, in a case that an inter-UE coordination is performed, determine auxiliary resource set information in inter-UE coordination information based on the channel sensing result of the sidelink communication of the first radio access technology.

In an embodiment of the present disclosure, the processing module is further configured to exclude candidate resources from a candidate resource set for the sidelink communication of the second radio access technology based on the channel sensing result of the sidelink communication of the first radio access technology.

In an embodiment of the present disclosure, the processing module is specifically configured to: determine time/frequency resources indicated in the SCI for the sidelink communication of the first radio access technology received in the channel sensing or reserved time/frequency resources based on the channel sensing result of the sidelink communication of the first radio access technology; and exclude candidate resources overlapping with the time/frequency resources indicated in the SCI or the reserved time/frequency resources from the candidate resource set for the sidelink communication of the second radio access technology.

In an embodiment of the present disclosure, the processing module is specifically configured to: determine an S-RSRP measurement value and/or an S-RSSI measurement value associated with the SCI; and exclude a second candidate resource from the candidate resource set for the sidelink communication of the second radio access technology. The second candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a fifth threshold.

In an embodiment of the present disclosure, there is a mapping relation between the fifth threshold and each of a priority level of the sidelink communication of the first radio access technology and a priority level of the inter-UE coordination for the sidelink communication of the second radio access technology indicated in the SCI; and/or the fifth threshold is configured independent of a sixth threshold or preconfigured, and the sixth threshold is a threshold used for excluding candidate resources based on a channel sensing result of the sidelink communication of the second radio access technology.

In an embodiment of the present disclosure, the auxiliary resource set information includes an unrecommended resource set, and the processing module is further configured to determine resources in the unrecommended resource set from the candidate resource set for the sidelink communication of the second radio access technology based on the channel sensing result of the sidelink communication of the first radio access technology.

In an embodiment of the present disclosure, the processing module is specifically configured to: determine time/frequency resources indicated in the SCI for the sidelink communication of the first radio access technology received in the channel sensing or reserved time/frequency resources based on the channel sensing result of the sidelink communication of the first radio access technology; and determine a third candidate resource in the candidate resource set for the sidelink communication of the second radio access technology as a resource in the unrecommended resource set. The third candidate resource is a candidate resource overlapping with the time/frequency resources indicated in the SCI or the reserved time/frequency resources.

In an embodiment of the present disclosure, the processing module is specifically configured to: determine an S-RSRP measurement value and/or an S-RSSI measurement value associated with the SCI; and determine a fourth candidate resource in the candidate resource set for the sidelink communication of the second radio access technology as the resource in the unrecommended resource set. The fourth candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a seventh threshold.

In an embodiment of the present disclosure, there is a mapping relation between the seventh threshold and each of a priority level of the sidelink communication of the first radio access technology and a priority level of the inter-UE coordination for the sidelink communication of the second radio access technology indicated in the SCI; and/or the seventh threshold is configured independent of an eighth threshold or preconfigured, and the eighth threshold is a threshold used for determining the resource in the unrecommended resource set based on a channel sensing result of the sidelink communication of the second radio access technology.

In a fourth aspect, the present disclosure provides in some embodiments a communication apparatus, including a transceiver module configured to transmit configuration information to a UE. The UE is a UE using a sidelink communication of a second radio access technology, the configuration information includes a threshold configured for the UE, and the threshold is a threshold used by the UE for executing a procedure of the sidelink communication of the second radio access technology based on a channel sensing result of a sidelink communication of a first radio access technology. The procedure includes at least one of: a resource selection or a resource re-selection; a transmission of a sidelink physical channel; a re-evaluation of a to-be-transmitted resource; an evaluation of a preemption of the to-be-transmitted resource; or a determination of auxiliary resource set information in inter-UE coordination information.

In a fifth aspect, the present disclosure provides in some embodiments a communication apparatus, including a processor. The processor is configured to call a computer program in the memory to implement the above-mentioned method in the first aspect.

In a sixth aspect, the present disclosure provides in some embodiments a communication apparatus, including a processor. The processor is configured to call a computer program in the memory to implement the above-mentioned method in the second aspect.

In a seventh aspect, the present disclosure provides in some embodiments a communication apparatus, including a processor and a memory storing therein a computer program. The processor is configured to execute the computer program in the memory to execute the above-mentioned method in the first aspect.

In an eighth aspect, the present disclosure provides in some embodiments a communication apparatus, including a processor and a memory storing therein a computer program. The processor is configured to execute the computer program in the memory to execute the above-mentioned method in the second aspect.

In a ninth aspect, the present disclosure provides in some embodiments a communication apparatus, including a processor and an interface circuit. The interface circuit is configured to receive a code instruction and transmit the code instruction to the processor, and the processor is configured to execute the code instruction to implement the above-mentioned method in the first aspect.

In a tenth aspect, the present disclosure provides in some embodiments a communication apparatus, including a processor and an interface circuit. The interface circuit is configured to receive a code instruction and transmit the code instruction to the processor, and the processor is configured to execute the code instruction to implement the above-mentioned method in the second aspect.

In an eleventh aspect, the present disclosure provides in some embodiments a sidelink communication coexistence system for multiple radio access technologies, including the communication apparatus in the third aspect and the communication apparatus in the fourth aspect, or including the communication apparatus in the fifth aspect and the communication apparatus in the sixth aspect, or including the communication apparatus in the seventh aspect and the communication apparatus in the eighth aspect, or including the communication apparatus in the ninth aspect and the communication apparatus in the tenth aspect.

In a twelfth aspect, the present disclosure provides in some embodiments a computer-readable storage medium storing therein instructions used by a UE. The instructions are executed to implement the above-mentioned method in the first aspect.

In a thirteenth aspect, the present disclosure provides in some embodiments a computer-readable storage medium storing therein instructions used by a network side device. The instructions are executed to implement the above-mentioned method in the second aspect.

In a fourteenth aspect, the present disclosure provides in some embodiments a computer program product including a computer program. The computer program product is executed by a computer to implement the above-mentioned method in the first aspect.

In a fifteenth aspect, the present disclosure provides in some embodiments a computer program product including a computer program. The computer program product is executed by a computer to implement the above-mentioned method in the second aspect.

In a sixteenth aspect, the present disclosure provides in some embodiments a chip system, including at least one processor and an interface, for supporting a UE to achieve functions involved in the first aspect, e.g., determine or process at least one of data or information involved in the above-mentioned method. In a possible design, the chip system further includes a memory storing therein necessary computer programs and data for the UE. The chip system includes a chip, or includes a chip and other discrete elements.

In a seventeenth aspect, the present disclosure provides in some embodiments a chip system, including at least one processor and an interface, for supporting a network side device to achieve functions involved in the second aspect, e.g., determine or process at least one of data or information involved in the above-mentioned method. In a possible design, the chip system further includes a memory storing therein necessary computer programs and data for the network side device. The chip system includes a chip, or includes a chip and other discrete elements.

In an eighteenth aspect, the present disclosure provides in some embodiments a computer program. The computer program is executed by a computer to implement the above-mentioned in the first aspect.

In a nineteenth aspect, the present disclosure provides in some embodiments a computer program. The computer program is executed by a computer to implement the above-mentioned in the second aspect.

### BRIEF DESCRIPTION OF THE DRAWINGS

In order to describe the technical solutions in the embodiments of the present disclosure or the background in a clearer manner, the drawings involved in the embodiments of the present disclosure or the background will be described hereinafter.
FIG. 1 is a schematic view showing an architecture of a communication system according to an embodiment of the present disclosure;
FIG. 2 is a flow chart of a sidelink communication coexistence method for multiple radio access technologies according to an embodiment of the present disclosure;
FIG. 3 is another flow chart of a sidelink communication coexistence method for multiple radio access technologies according to an embodiment of the present disclosure;
FIG. 4 is yet another flow chart of a sidelink communication coexistence method for multiple radio access technologies according to an embodiment of the present disclosure;
FIG. 5 is still yet another flow chart of a sidelink communication coexistence method for multiple radio access technologies according to an embodiment of the present disclosure;
FIG. 6 is still yet another flow chart of a sidelink communication coexistence method for multiple radio access technologies according to an embodiment of the present disclosure;
FIG. 7 is still yet another flow chart of a sidelink communication coexistence method for multiple radio access technologies according to an embodiment of the present disclosure;
FIG. 8 is still yet another flow chart of a sidelink communication coexistence method for multiple radio access technologies according to an embodiment of the present disclosure;
FIG. 9 is still yet another flow chart of a sidelink communication coexistence method for multiple radio access technologies according to an embodiment of the present disclosure;
FIG. 10 is a schematic view showing a communication apparatus according to an embodiment of the present disclosure;
FIG. 11 is another schematic view showing a communication apparatus according to an embodiment of the present disclosure; and
FIG. 12 is a schematic view showing a chip according to an embodiment of the present disclosure.

### DETAILED DESCRIPTION

The present disclosure will be described hereinafter in details in conjunction with illustrative embodiments, and examples thereof are shown in the drawings. Identical or similar reference numerals in the drawings represent an identical or similar element or elements having an identical or similar function. The following embodiments are for illustrative purposes only, but shall not be used to limit the scope of the present disclosure. In the description of the present disclosure, unless otherwise defined, the symbol "/" usually refers to "or". For example, "A/B" may represent A or B. The expression "and/or" may be merely used to describe the relationship between associated objects, and it may include three relationships. For example, "A and/or B" may represent that, there is only A, there are both A and B, and there is only B. The implementations in the following description do not include all implementations consistent with the embodiments of the present disclosure, and in contrast, they are merely examples of devices and methods consistent with some aspects of the embodiments of the present disclosure.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined.

It should be appreciated that, depending on the context, such a word as "if" may be construed as "when ...", "in the case that ..." or "in response to determining that ...".

The present disclosure will be described hereinafter in details in conjunction with illustrative embodiments, and examples thereof are shown in the drawings. Identical or similar reference numerals in the drawings represent an identical or similar element or elements having an identical or similar function. The following embodiments are for illustrative purposes only, but shall not be used to limit the scope of the present disclosure.

In order to understand the sidelink communication coexistence method for multiple radio access technologies in the embodiments of the present disclosure in a better manner, an applicable communication system will be described hereinafter at first.

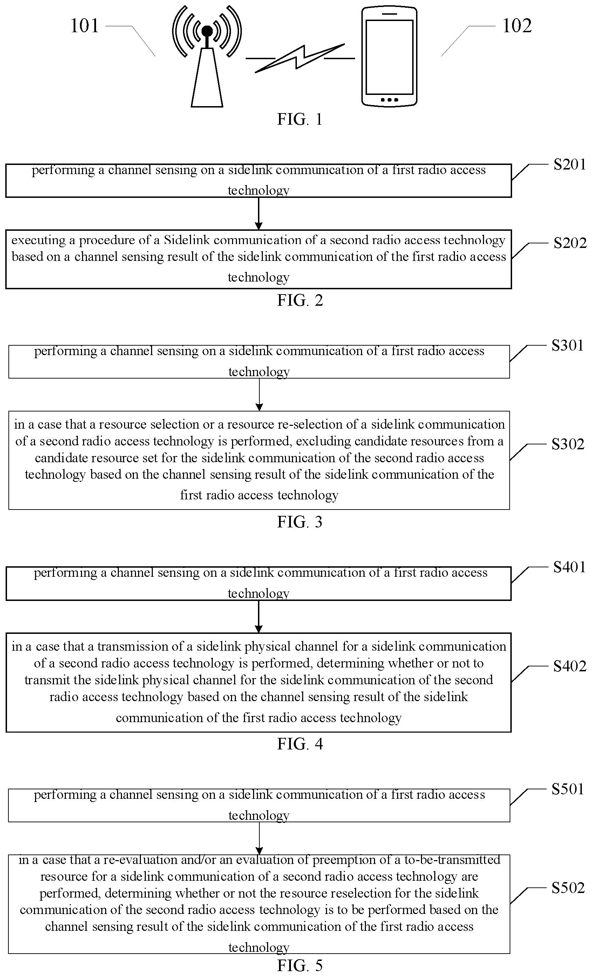

FIG. 1 is a schematic view showing an architecture of a communication system according to an embodiment of the present disclosure. The communication system includes, but not limited to, one network side device and one UE. The quantities and forms of the devices in FIG. 1 are for illustrative purposes only, but shall not be construed as limiting the present disclosure. In actual use, the communication system may include two or more network side device, and two or more UEs. In FIG. 1, the communication system including one network side device 101 and one UE 102 is taken as an example.

It should be appreciated that, the technical solution in the embodiments of the present disclosure may be applied to various communication systems, e.g., an LTE system, a 5th-Generation (5G) mobile communication system, a 5G NR system, or any novel mobile communication system that may occur in the future. It should be further appreciated that, "sidelink" in the embodiments of the present disclosure may also be called as a side link or a direct link.

In the embodiments of the present disclosure, the network side device 101 is an entity at a network side for sending or receiving a signal. For example, the network side device 101 is an evolved NodeB (eNB), a Transmission Reception Point (TRP), a next generation NodeB (gNB) in the NR system, a base station in the future mobile communication system, or an access point in a Wireless Fidelity (WiFi) system. A specific technology adopted by the network side device and a specific device form thereof will not be particularly defined herein. The network side device in the embodiments of the present disclosure may consist of a Central Unit (CU) and a Distributed Unit (DU), and the CU may also be called as control unit. Through the CU-DU structure, a protocol layer for the network side device, e.g., the base station, is divided, i.e., a part of functions of the protocol layer are centrally controlled by the CU, a part of, or all of, the remaining functions of the protocol layer are distributed in the DU, and the DU is controlled by the CU.

In the embodiments of the present disclosure, the UE 102 is an entity at a user side for receiving or sending a signal, e.g., a mobile phone. The UE may also be called as terminal, terminal device, Mobile Station (MS), Mobile Terminal (MT), etc. The UE may be a vehicle having a communication function, a smart vehicle, a mobile phone, a wearable device, a pad, a computer having a wireless transceiver function, a Virtual Reality (VR) terminal, an Augmented Reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. In the embodiments of the present disclosure, a specific technology adopted by the UE and a specific device form thereof will not be particularly defined.

It should be appreciated that, in sidelink communication, there are NR sidelink communication and LTE sidelink communication. The NR sidelink is incompatible with the LTE sidelink, an NR sidelink receiver cannot send or receive an LTE sidelink signal, and the LTE sidelink receiver cannot send or receive an NR sidelink signal. For both the NR sidelink and the LTE sidelink, interference needs to be reduced through resource reservation and channel sensing. If each of them cannot obtain resource reservation information from the other one, it is impossible to prevent them from selecting the same time/frequency resource, so a transmission resource collision occurs, and the transmission reliability is adversely affected. In addition, the LTE sidelink is a precedent technology, so it is impossible to enhance the LTE sidelink to support dynamic resource sharing. In the present disclosure, channel sensing is performed on the LTE sidelink communication to obtain the resource reservation information about the LTE sidelink, so that a UE using the NR sidelink for communication can avoid the time/frequency resources desired for the LTE sidelink communication.

It should be appreciated that, the communication system described herein is used to describe the technical solutions provided in the embodiments of the present disclosure in a clearer manner, but shall not be construed as limiting the technical solutions. It is obvious for a person skilled in the art that, along with the evolution of the system architecture as well as the emergence of new service scenarios, the technical solutions are also applicable to similar technical problems.

A sidelink communication coexistence method for multiple radio access technologies and the application thereof will be described hereinafter in details in conjunction with the drawings.

FIG. 2 is a flow chart of a sidelink communication coexistence method for multiple radio access technologies according to an embodiment of the present disclosure. This method is performed by a UE for a sidelink communication of a second radio access technology. As shown in FIG. 2, the method includes, but not limited to, the following steps.

Step S201: a channel sensing is performed on a sidelink communication of a first radio access technology.

In embodiments of the present disclosure, the first radio access technology is an LTE radio access technology, and the second radio access technology is an NR radio access technology.

Step S202: a procedure of the sidelink communication of the second radio access technology is executed based on a channel sensing result of the sidelink communication of the first radio access technology.

In embodiments of the present disclosure, the procedure includes at least one of: a resource selection or a resource re-selection; a transmission of a sidelink physical channel; a re-evaluation of a to-be-transmitted resource; an evaluation of preemption of the to-be-transmitted resource; or a determination of auxiliary resource set information in inter-UE coordination information.

For example, the UE determines a specific implementation mode for executing one or more procedures of the NR sidelink communication based on the channel sensing result of the LTE sidelink communication.

In the embodiments of the present disclosure, the specific implementation mode for executing, by the UE, each procedure of the NR sidelink communication may be any mode, which will not be particularly defined herein.

According to the embodiments of the present disclosure, the UE executes the procedure of the sidelink communication of the second radio access technology based on the channel sensing result of the sidelink communication of the first radio access technology, so as to enable the sidelink communication of the second radio access technology to avoid a reserved resource for the sidelink communication of the first radio access technology, prevent the occurrence of transmission resource collision, enable the sidelink of the first radio access technology and the sidelink of the second radio access technology to dynamically share transmission resources on the same carrier frequency, and improve the use efficiency of the transmission resources.

Optionally, in some embodiments of the present disclosure, the performing the channel sensing on the sidelink communication of the first radio access technology includes at least one of: receiving a PSCCH for the sidelink communication of the first radio access technology; or determining an S-RSRP measurement value and/or an S-RSSI measurement value corresponding to SCI in the PSCCH for the sidelink communication of the first radio access technology.

For example, the UE performs the channel sensing on the LTE sidelink communication, so as to receive the PSCCH for the LTE sidelink communication.

For another example, the UE performs the channel sensing on the LTE sidelink communication, so as to determine the S-RSRP measurement value corresponding to the SCI in the PSCCH for the LTE sidelink communication.

For yet another example, the UE performs the channel sensing on the LTE sidelink communication, so as to determine the S-RSSI measurement value corresponding to the SCI in the PSCCH for the LTE sidelink communication.

For still yet another example, the UE performs the channel sensing on the LTE sidelink communication, so as to receive the PSCCH for the LTE sidelink communication and determine the S-RSRP measurement value corresponding to the SCI in the PSCCH for the LTE sidelink communication.

For still yet another example, the UE performs the channel sensing on the LTE sidelink communication, so as to receive the PSCCH for the LTE sidelink communication and determine the S-RSSI measurement value corresponding to the SCI in the PSCCH for the LTE sidelink communication.

For still yet another example, the UE performs the channel sensing on the LTE sidelink communication, so as to receive the PSCCH for the LTE sidelink communication, and determine the S-RSRP measurement value and the S-RSSI measurement value corresponding to the SCI in the PSCCH for the LTE sidelink communication.

It should be appreciated that, in some embodiments of the present disclosure, in a case that a time domain or time/frequency resources in a resource pool for the sidelink communication of the first radio access technology overlaps with a time domain or time/frequency resources in a resource pool for the sidelink communication of the second radio access technology, the channel sensing is performed in the resource pool for the sidelink communication of the first radio access technology. The resource pool for the sidelink communication of the first radio access technology includes the time/frequency resources for the sidelink communication of the first radio access technology, and the resource pool for the sidelink communication of the second radio access technology includes the time/frequency resources for the sidelink communication of the second radio access technology.

Taking the first radio access technology being the LTE radio access technology and the second radio access technology being the NR radio access technology as an example, in a case that the time domain or the time/frequency resources in the resource pool for the LTE sidelink communication overlaps with that in the resource pool for the NR sidelink communication, the UE performs the channel sensing on a time and a spectrum corresponding to the time/frequency resources in the resource pool for the LTE sidelink communication.

During the implementation, the procedure of the sidelink communication of the second radio access technology includes the resource selection or resource reselection. The UE performs the resource selection or resource reselection for the NR sidelink communication based on the channel sensing result of the LTE sidelink communication. For instance, FIG. 3 is another flow chart of a sidelink communication coexistence method for multiple radio access technologies. This method is performed by a UE for a sidelink communication of a second radio access technology. As shown in FIG. 3, the method includes, but not limited to, the following steps.

Step S301: a channel sensing is performed on a sidelink communication of a first radio access technology.

In the embodiments of the present disclosure, Step S301 may be implemented by using any of the embodiments of the present disclosure, which is not limited in the embodiments of the disclosure, wherein details will not be particularly defined herein again.

Step S302: in a case that the resource selection or the resource re-selection of the sidelink communication of the second radio access technology is performed, candidate resources are excluded from a candidate resource set for the sidelink communication of the second radio access technology based on the channel sensing result of the sidelink communication of the first radio access technology.

Optionally, in an embodiment of the present disclosure, the UE determines time/frequency resources indicated in SCI for the sidelink communication of the first radio access technology received in the channel sensing or reserved time/frequency resources based on the channel sensing result of the sidelink communication of the first radio access technology, and excludes candidate resources overlapping with the time/frequency resources indicated in the SCI or the reserved time/frequency resources from the candidate resource set for the sidelink communication of the second radio access technology.

For example, the UE determines the to-be-occupied time/frequency resources indicated in the SCI for the LTE sidelink communication based on the channel sensing result of the LTE sidelink communication, and excludes the time/frequency resources overlapping with the time/frequency resources from the candidate time/frequency resource set for the NR sidelink communication.

For another example, the UE determines the reserved time/frequency resources for the LTE sidelink communication based on the channel sensing result of the LTE sidelink communication, and excludes the time/frequency resources overlapping with the time/frequency resources from the candidate time/frequency resource set for the NR sidelink communication.

Optionally, the excluding candidate resources overlapping with the time/frequency resources indicated in the SCI or the reserved time/frequency resources from the candidate resource set for the sidelink communication of the second radio access technology includes: determining an S-RSRP measurement value and/or an S-RSSI measurement value associated with the SCI; and excluding a first candidate resource from the candidate resource set for the sidelink communication of the second radio access technology. The first candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a first threshold.

For example, the UE determines the time/frequency resources indicated in the SCI for the LTE sidelink communication or the reserved time/frequency resources based on the channel sensing result of the LTE sidelink communication, determines the S-RSRP measurement value associated with the SCI for the LTE sidelink communication, and in a case that the time/frequency resource overlaps with the candidate resource set for the NR sidelink communication and the S-RSRP measurement value is greater than or equal to the first threshold, excludes time/frequency resources overlapping with the time/frequency resources from the candidate resource set for the NR sidelink communication.

For another example, the UE determines the time/frequency resources indicated in the SCI for the LTE sidelink communication or the reserved time/frequency resources based on the channel sensing result of the LTE sidelink communication, determines the S-RSSI measurement value associated with the SCI for the LTE sidelink communication, and in a case that the time/frequency resource overlaps with the candidate resource set for the NR sidelink communication and the S-RSSI measurement value is greater than or equal to the first threshold, excludes time/frequency resources overlapping with the time/frequency resources from the candidate resource set for the NR sidelink communication.

For yet another example, the UE determines the time/frequency resources indicated in the SCI for the LTE sidelink communication or the reserved time/frequency resources based on the channel sensing result of the LTE sidelink communication, determines the S-RSRP measurement value and the S-RSSI measurement value associated with the SCI for the LTE sidelink communication, and in a case that the time/frequency resource overlaps with the candidate resource set for the NR sidelink communication and each of the S-RSRP measurement value and the S-RSSI measurement value is greater than or equal to the first threshold, excludes time/frequency resources overlapping with the time/frequency resources from the candidate resource set for the NR sidelink communication.

Optionally, there is a mapping relation between the first threshold and each of a priority level of the sidelink communication of the first radio access technology and a priority level of the sidelink communication of the second radio access technology indicated in the SCI; and/or the first threshold is configured independent of a second threshold or preconfigured. The second threshold is a threshold used for excluding candidate resources based on a channel sensing result of the sidelink communication of the second radio access technology.

In embodiments of the present disclosure, a specific implementation mode for excluding the candidate resources based on the channel sensing result of the NR sidelink communication is identical to the implementation mode for excluding the candidate resources from the candidate resource set for the NR sidelink communication based on the channel sensing result of the LTE sidelink communication, which will not be particularly defined herein again.

For example, the first threshold is set based on channel state information about a channel. The first threshold needs to be set in such a manner that a signal whose power is greater than or equal to the first threshold is transmitted normally through the channel. In addition, the first threshold needs to be smaller than the second threshold used for excluding the candidate resource based on the channel sensing result of the NR sidelink communication, so as to ensure that the priority level of the LTE sidelink communication is greater than or equal to the priority level of the NR sidelink communication.

For another example, the first threshold needs to be set in such a manner that a signal whose power is greater than or equal to the first threshold is transmitted normally through the channel. In addition, the first threshold needs to be smaller than the second threshold used for excluding the candidate resource based on the channel sensing result of the NR sidelink communication. The first threshold and the second threshold are configured independent of each other or preconfigured based on the channel state information about the channel and the above-mentioned relationship.

For yet another example, the first threshold and the second threshold are configured independent of each other or preconfigured based on an actual situation.

It should be appreciated that, the lower the criteria desired for the normal communication through the channel, the larger the probability that the criteria is met. Hence, in a case that the LTE sidelink communication and the NR sidelink communication are performed on the same channel, sizes of the thresholds corresponding to the two communication modes reflect communication difficulties of the two communication modes on the channel. The smaller the threshold corresponding to a communication mode, the lower the communication difficulty of the communication mode. In embodiments of the present disclosure, through configuring the first threshold to be smaller than the second threshold, in a case that the UE performs the communication on the same channel, the difficulty of the NR sidelink communication is higher than that of the LTE sidelink communication. In this way, in a case that the communication is performed on the same channel, the priority level of the LTE sidelink communication is higher than that of the NR sidelink communication.

According to embodiments of the present disclosure, the UE excludes the candidate resources from the candidate resource set for the NR sidelink communication based on the channel sensing result of the LTE sidelink communication, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

During the implementation, the procedure of the NR sidelink communication includes the transmission of the sidelink physical channel. The UE determines whether or not to transmit the sidelink physical channel for the NR sidelink communication based on the channel sensing result of the LTE sidelink communication. For instance, FIG. 4 is a flow chart of a sidelink communication coexistence method for multiple radio access technologies. This method is performed by a UE for a sidelink communication of a second radio access technology. As shown in FIG. 4, the method includes, but not limited to, the following steps.

Step S401: a channel sensing is performed on a sidelink communication of a first radio access technology.

In the embodiments of the present disclosure, Step S401 may be implemented by using any of the embodiments of the present disclosure, which is not limited in the embodiments of the disclosure, wherein details will not be particularly defined herein again.

Step S402: in a case that the transmission of the sidelink physical channel for the sidelink communication of the second radio access technology is performed, whether or not to transmit the sidelink physical channel for the sidelink communication of the second radio access technology is determined based on the channel sensing result of the sidelink communication of the first radio access technology.

Optionally, in an embodiment of the present disclosure, time/frequency resources indicated in SCI for the sidelink communication of the first radio access technology received in the channel sensing or reserved time/frequency resources are determined based on the channel sensing result of the sidelink communication of the first radio access technology; the transmission of the sidelink physical channel for the sidelink communication of the second radio access technology is cancelled, and the time/frequency resources indicated in the SCI or the reserved time/frequency resources overlap with time/frequency resources used by a to-be-transmitted sidelink physical channel for the sidelink communication of the second radio access technology; or the sidelink physical channel for the sidelink communication of the second radio access technology is transmitted, and the time/frequency resources indicated in the SCI or the reserved time/frequency resources do not overlap with the time/frequency resources used by the to-be-transmitted sidelink physical channel for the sidelink communication of the second radio access technology.

For example, the UE determines the to-be-occupied time/frequency resources indicated in the received SCI for the LTE sidelink communication based on the channel sensing result of the LTE sidelink communication, and in a case that the time/frequency resources overlap with time/frequency resources used by the to-be-transmitted sidelink channel for the NR sidelink communication, cancels the transmission of the sidelink channel for the NR sidelink communication.

For another example, the UE determines the time/frequency resources to be reserved for the LTE sidelink communication based on the channel sensing result of the LTE sidelink communication, and in a case that the time/frequency resources do not overlap with time/frequency resources used by the to-be-transmitted sidelink channel for the NR sidelink communication, performs the transmission of the sidelink channel for the NR sidelink communication.

Optionally, the determining whether or not to transmit the sidelink physical channel for the sidelink communication of the second radio access technology based on the channel sensing result of the sidelink communication of the first radio access technology includes: determining an S-RSRP measurement value and/or an S-RSSI measurement value associated with the SCI; in a case that the time/frequency resources indicated in the SCI or the reserved time/frequency resources overlap with the time/frequency resources used by the to-be-transmitted sidelink physical channel for the sidelink communication of the second radio access technology and the S-RSRP measurement value and/or the S-RSSI measurement value associated with the SCI are greater than or equal to a third threshold, cancelling the transmission of the sidelink physical channel for the sidelink communication of the second radio access technology; or in a case that the time/frequency resources indicated in the SCI or the reserved time/frequency resources do not overlap with the time/frequency resources used by the to-be-transmitted sidelink physical channel for the sidelink communication of the second radio access technology and/or the S-RSRP measurement value and/or the S-RSSI measurement value associated with the SCI are smaller than the third threshold, transmitting the sidelink physical channel for the sidelink communication of the second radio access technology.

For example, the UE determines the time/frequency resources indicated in the SCI for the LTE sidelink communication or the reserved time/frequency resources based on the channel sensing result of the LTE sidelink communication, determines the S-RSRP measurement value associated with the SCI for the LTE sidelink communication, and in a case that the time/frequency resources overlap with time/frequency resources used for the to-be-transmitted sidelink communication for the NR sidelink communication and the S-RSRP measurement value is greater than or equal to the predetermined third threshold, cancels the transmission of the sidelink channel for the NR sidelink communication.

For another example, the UE determines the time/frequency resources indicated in the SCI for the LTE sidelink communication or the reserved time/frequency resources based on the channel sensing result of the LTE sidelink communication, determines the S-RSSI measurement value associated with the SCI for the LTE sidelink communication, and in a case that the time/frequency resources overlap with time/frequency resources used for the to-be-transmitted sidelink communication for the NR sidelink communication and the S-RSSI measurement value is greater than or equal to the predetermined third threshold, cancels the transmission of the sidelink channel for the NR sidelink communication.

For yet another example, the UE determines the time/frequency resources indicated in the SCI for the LTE sidelink communication or the reserved time/frequency resources based on the channel sensing result of the LTE sidelink communication, determines the S-RSRP measurement value and the S-RSSI measurement value associated with the SCI for the LTE sidelink communication, and in a case that the time/frequency resources overlap with time/frequency resources used for the to-be-transmitted sidelink communication for the NR sidelink communication and each of the S-RSRP measurement value and the S-RSSI measurement value is greater than or equal to the predetermined third threshold, cancels the transmission of the sidelink channel for the NR sidelink communication.

For still yet another example, the UE determines the time/frequency resources indicated in the SCI for the LTE sidelink communication or the reserved time/frequency resources based on the channel sensing result of the LTE sidelink communication, and in a case that the time/frequency resources do not overlap with time/frequency resources used for the to-be-transmitted sidelink channel for the NR sidelink communication, performs the transmission of the sidelink channel for the NR sidelink communication.

For still yet another example, the UE determines the time/frequency resources indicated in the SCI for the LTE sidelink communication or the reserved time/frequency resources based on the channel sensing result of the LTE sidelink communication, determines the S-RSRP measurement value associated with the SCI for the LTE sidelink communication, and in a case that the time/frequency resources overlap with the time/frequency resources used for the to-be-transmitted sidelink channel for the NR sidelink communication but the S-RSRP measurement value is smaller than the predetermined third threshold, performs the transmission of the sidelink channel for the NR sidelink communication.

For still yet another example, the UE determines the time/frequency resources indicated in the SCI for the LTE sidelink communication or the reserved time/frequency resources based on the channel sensing result of the LTE sidelink communication, determines the S-RSSI measurement value associated with the SCI for the LTE sidelink communication, and in a case that the time/frequency resources overlap with the time/frequency resources used for the to-be-transmitted sidelink channel for the NR sidelink communication but the S-RSSI measurement value is smaller than the predetermined third threshold, performs the transmission of the sidelink channel for the NR sidelink communication.

For still yet another example, the UE determines the time/frequency resources indicated in the SCI for the LTE sidelink communication or the reserved time/frequency resources based on the channel sensing result of the LTE sidelink communication, determines the S-RSRP measurement value and the S-RSSI measurement value associated with the SCI for the LTE sidelink communication, and in a case that the time/frequency resources overlap with the time/frequency resources used for the to-be-transmitted sidelink channel for the NR sidelink communication but each of the S-RSSI measurement value and the S-RSRP measurement value is smaller than the predetermined third threshold, performs the transmission of the sidelink channel for the NR sidelink communication.

Optionally, in an embodiment of the present disclosure, there is mapping relation between the third threshold and each of a priority level of the sidelink communication of the first radio access technology and a priority level of the sidelink communication of the second radio access technology indicated in the SCI.

For example, the third threshold may be set based on channel state information about a channel. The third threshold needs to be set in such a manner that a signal whose power is greater than or equal to the third threshold is transmitted normally through the channel. In addition, the third threshold needs to ensure that the priority level of the LTE sidelink communication is higher than that of the NR sidelink communication (e.g., on the basis that the normal communication is ensured, the third threshold is set as small as possible, so as to increase, as possible, a probability that the signal power is greater than or equal to the third threshold in a case that the UE performs communication through the LTE sidelink.).

According to embodiments of the present disclosure, the UE determines whether or not to transmit the sidelink channel for the NR sidelink communication based on the channel sensing result of the LTE sidelink communication, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

During the implementation, a procedure of the NR sidelink communication may be the re-evaluation and/or evaluation of preemption of a to-be-transmitted resource. The UE determines whether or not to perform the resource reselection for the NR sidelink communication based on the channel sensing result of the LTE sidelink communication. For instance, FIG. 5 is a flow chart of a sidelink communication coexistence method for multiple radio access technologies. This method is performed by a UE for a sidelink communication of a second radio access technology. As shown in FIG. 5, the method includes, but not limited to, the following steps.

Step S501: a channel sensing is performed on a sidelink communication of a first radio access technology.

In the embodiments of the present disclosure, Step S501 may be implemented by using any of the embodiments of the present disclosure, which is not limited in the embodiments of the disclosure, wherein details will not be particularly defined herein again.

Step S502: in a case that the re-evaluation and/or the evaluation of the preemption of the to-be-transmitted resource for the sidelink communication of the second radio access technology are performed, whether or not the resource reselection for the sidelink communication of the second radio access technology is to be performed is determined based on the channel sensing result of the sidelink communication of the first radio access technology.

For example, in a case that the re-evaluation of the to-be-transmitted resource for the NR sidelink communication is performed, the UE determines whether or not to perform resource reselection for the NR sidelink communication based on the channel sensing result of the LTE sidelink communication.

For another example, in a case that the evaluation of the preemption of the to-be-transmitted resource for the NR sidelink communication is performed, the UE determines whether or not to perform resource reselection for the NR sidelink communication based on the channel sensing result of the LTE sidelink communication.

For yet another example, in a case that the re-evaluation and evaluation of the preemption of the to-be-transmitted resource for the NR sidelink communication is performed, the UE determines whether or not to perform resource reselection for the NR sidelink communication based on the channel sensing result of the LTE sidelink communication.

Optionally, in an embodiment of the present disclosure, the determining whether or not the resource reselection for the sidelink communication of the second radio access technology is to be performed based on the channel sensing result of the sidelink communication of the first radio access technology includes: determining time/frequency resources indicated in the SCI for the first radio access technology sidelink communication received in the channel sensing or reserved time/frequency resources based on the channel sensing result of the sidelink communication of the first radio access technology; performing the resource reselection on a PSCCH/a Physical Sidelink Shared Channel (PSSCH) for the sidelink communication of the second radio access technology transmitted using the to-be-transmitted resource, the time/frequency resources indicated in the SCI or the reserved time/frequency resources overlapping with the to-be-transmitted resource; or performing transmission of a sidelink of the second radio access technology using the to-be-transmitted resource, the time/frequency resources indicated in the SCI or the reserved time/frequency resources not overlapping with the to-be-transmitted resource.

For example, the UE determines the time/frequency resources indicated in the SCI for the LTE sidelink communication received in the channel sensing based on the channel sensing result of the LTE sidelink communication, and in a case that the time/frequency resources overlap with the to-be-transmitted resource, performs the resource reselection on the PSCCH/PSSCH for the NR sidelink communication transmitted using the to-be-transmitted resource.

For another example, the UE determines the reserved time/frequency resources for the LTE sidelink communication received in the channel sensing based on the channel sensing result of the LTE sidelink communication, and in a case that the time/frequency resources overlap with the to-be-transmitted resource, performs the resource reselection on the PSCCH/PSSCH for the NR sidelink communication transmitted using the to-be-transmitted resource.

For yet another example, the UE determines the time/frequency resources indicated in the SCI for the LTE sidelink communication received in the channel sensing based on the channel sensing result of the LTE sidelink communication, and in a case that the time/frequency resources do overlap with the to-be-transmitted resource, transmits the NR sidelink using the to-be-transmitted resource.

For still yet another example, the UE determines the reserved time/frequency resources for the LTE sidelink communication received in the channel sensing based on the channel sensing result of the LTE sidelink communication, and in a case that the time/frequency resources do overlap with the to-be-transmitted resource, transmits the NR sidelink using the to-be-transmitted resource.

Optionally, the determining whether or not the resource reselection for the sidelink communication of the second radio access technology is to be performed based on the channel sensing result of the sidelink communication of the first radio access technology further includes: determining an S-RSRP measurement value and/or an S-RSSI measurement value associated with the SCI; in a case that the time/frequency resources indicated in the SCI or the reserved time/frequency resources overlap with the to-be-transmitted resource and the S-RSRP measurement value and/or the S-RSSI measurement value associated with the SCI are greater than or equal to a fourth threshold, performing the resource reselection on the PSCCH/PSSCH for the sidelink communication of the second radio access technology transmitted using the to-be-transmitted resource; or in a case that the time/frequency resources indicated in the SCI or the reserved time/frequency resources do not overlap with the to-be-transmitted resource and/or the S-RSRP measurement value and/or the S-RSSI measurement value associated with the SCI are smaller than the fourth threshold, performing transmission of the second radio access technology sidelink using the to-be-transmitted resource.

For example, the UE determines the time/frequency resources indicated in the SCI for the LTE sidelink communication received in the channel sensing or the reserved time/frequency resources based on the channel sensing result of the LTE sidelink communication, determines the S-RSRP measurement value associated with the SCI for the LTE sidelink communication, and in a case that the time/frequency resources overlap with the to-be-transmitted resource and the S-RSRP measurement value is greater than or equal to the fourth threshold, performs resource reselection on the PSCCH/PSSCH for the NR sidelink communication transmitted using the to-be-transmitted resource.

For another example, the UE determines the time/frequency resources indicated in the SCI for the LTE sidelink communication received in the channel sensing or the reserved time/frequency resources based on the channel sensing result of the LTE sidelink communication, determines the S-RSSI measurement value associated with the SCI for the LTE sidelink communication, and in a case that the time/frequency resources overlap with the to-be-transmitted resource and the S-RSSI measurement value is greater than or equal to the fourth threshold, performs resource reselection on the PSCCH/PSSCH for the NR sidelink communication transmitted using the to-be-transmitted resource.

For yet another example, the UE determines the time/frequency resources indicated in the SCI for the LTE sidelink communication received in the channel sensing or the reserved time/frequency resources based on the channel sensing result of the LTE sidelink communication, determines the S-RSRP measurement value and the S-RSSI measurement value associated with the SCI for the LTE sidelink communication, and in a case that the time/frequency resources overlap with the to-be-transmitted resource and each of the S-RSRP measurement value and the S-RSSI measurement value is greater than or equal to the fourth threshold, performs resource reselection on the PSCCH/PSSCH for the NR sidelink communication transmitted using the to-be-transmitted resource.

For still yet another example, the UE determines the time/frequency resources indicated in the SCI for the LTE sidelink communication received in the channel sensing or the reserved time/frequency resources based on the channel sensing result of the LTE sidelink communication, and in a case that the time/frequency resources do not overlap with the to-be-transmitted resource, performs the transmission of the NR sidelink using the to-be-transmitted resource.

For still yet another example, the UE determines the time/frequency resources indicated in the SCI for the LTE sidelink communication received in the channel sensing or the reserved time/frequency resources based on the channel sensing result of the LTE sidelink communication, determines the S-RSRP measurement value associated with the SCI for the LTE sidelink communication, and in a case that the time/frequency resources overlap with the to-be-transmitted resource and the S-RSRP measurement value is smaller than the fourth threshold, performs the transmission of the NR sidelink using the to-be-transmitted resource.

For still yet another example, the UE determines the time/frequency resources indicated in the SCI for the LTE sidelink communication received in the channel sensing or the reserved time/frequency resources based on the channel sensing result of the LTE sidelink communication, determines the S-RSSI measurement value associated with the SCI for the LTE sidelink communication, and in a case that the time/frequency resources overlap with the to-be-transmitted resource and the S-RSSI measurement value is smaller than the fourth threshold, performs the transmission of the NR sidelink using the to-be-transmitted resource.

For still yet another example, the UE determines the time/frequency resources indicated in the SCI for the LTE sidelink communication received in the channel sensing or the reserved time/frequency resources based on the channel sensing result of the LTE sidelink communication, determines the S-RSRP measurement value and the S-RSSI measurement value associated with the SCI for the LTE sidelink communication, and in a case that the time/frequency resources overlap with the to-be-transmitted resource and each of the S-RSSI measurement value and the S-RSRP measurement value is smaller than the fourth threshold, performs the transmission of the NR sidelink using the to-be-transmitted resource.

Optionally, there is a mapping relation between the fourth threshold and each of a priority level of the sidelink communication of the first radio access technology and a priority level of the transmission of the PSCCH/PSSCH for the sidelink communication of the second radio access technology indicated in the SCI.

For example, the fourth threshold may be set based on channel state information about a channel. The fourth threshold needs to be set in such a manner that a signal whose power is greater than or equal to the fourth threshold is transmitted normally through the channel. In addition, the fourth threshold needs to ensure that the priority level of the LTE sidelink communication is higher than that of the PSCCH/PSSCH for the NR sidelink communication (e.g., on the basis that the normal communication is ensured, the fourth threshold is set as small as possible, so as to increase, as possible, a probability that the signal power is greater than or equal to the fourth threshold in a case that the UE performs communication through the LTE sidelink.).

According to embodiments of the present disclosure, the UE determines whether or not to perform the resource reselection for the NR sidelink communication based on the channel sensing result of the LTE sidelink communication, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

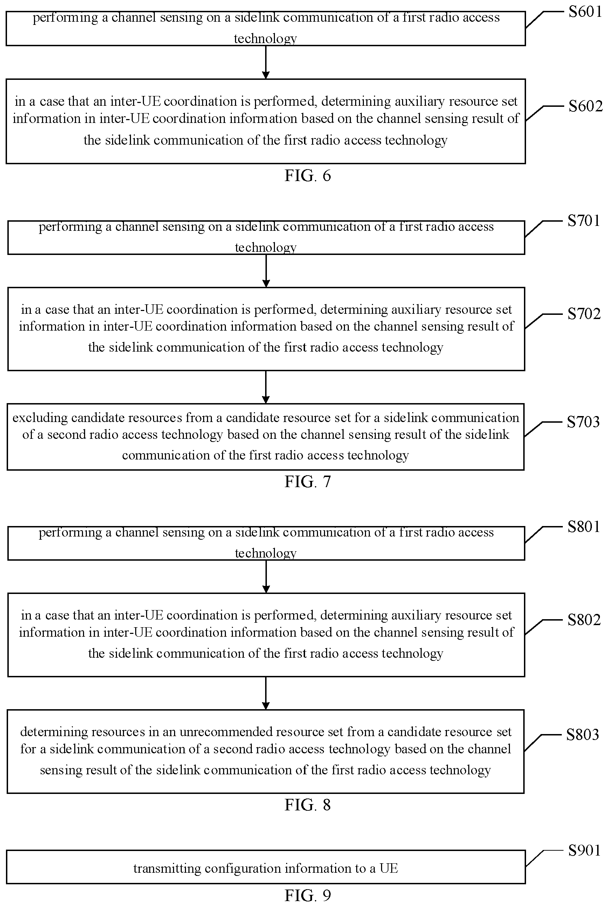

During the implementation, a procedure of the NR sidelink communication may be a determination of auxiliary resource set information in inter-UE coordination information. The UE determines the auxiliary resource set information based on the channel sensing result of the LTE sidelink communication in a case that an inter-UE coordination is performed. For instance, FIG. 6 is a flow chart of a sidelink communication coexistence method for multiple radio access technologies. This method is performed by a UE for a sidelink communication of a second radio access technology. As shown in FIG. 6, the method includes, but not limited to, the following steps.

Step S601: a channel sensing is performed on a sidelink communication of a first radio access technology.

In the embodiments of the present disclosure, Step S601 may be implemented by using any of the embodiments of the present disclosure, which is not limited in the embodiments of the disclosure, wherein details will not be particularly defined herein again.

Step S602: in a case that an inter-UE coordination is performed, auxiliary resource set information in inter-UE coordination information is determined based on the channel sensing result of the sidelink communication of the first radio access technology.

For example, the UE which performs the method in the embodiments of the present disclosure may coordinate with the other UE, so as to perform the channel sensing on the LTE sidelink communication, thereby to determine the auxiliary resource set information based on information shared between the UEs.

In embodiments of the present disclosure, the auxiliary resource set information includes at least one of a recommended resource set or an unrecommended resource set. The recommended resource set refers to a set of time/frequency resources intended to be used by the UEs which perform the coordination, and the unrecommended resource set refers to a set of time/frequency resources not intended to be used by the UEs which perform the coordination.

According to embodiments of the present disclosure, the UE determines the auxiliary resource set information in the inter-UE coordination information based on the channel sensing result of the LTE sidelink communication, so as to enable the NR sidelink communication to avoid the LTE sidelink communication based on the auxiliary resource set information, prevent the occurrence of transmission resource collision, enable the LTE sidelink and the NR sidelink to dynamically share transmission resources on the same carrier frequency, and improve the use efficiency of the transmission resources.

FIG. 7 is a flow chart of a sidelink communication coexistence method for multiple radio access technologies. This method is performed by a UE for a sidelink communication of a second radio access technology. As shown in FIG. 7, the method includes, but not limited to, the following steps.

Step S701: a channel sensing is performed on a sidelink communication of a first radio access technology.

In the embodiments of the present disclosure, Step S701 may be implemented by using any of the embodiments of the present disclosure, which is not limited in the embodiments of the disclosure, wherein details will not be particularly defined herein again.

Step S702: in a case that an inter-UE coordination is performed, auxiliary resource set information in inter-UE coordination information is determined based on the channel sensing result of the sidelink communication of the first radio access technology.

In the embodiments of the present disclosure, Step S702 may be implemented by using any of the embodiments of the present disclosure, which is not limited in the embodiments of the disclosure, wherein details will not be particularly defined herein again.

Step S703: candidate resources are excluded from a candidate resource set for the sidelink communication of the second radio access technology based on the channel sensing result of the sidelink communication of the first radio access technology.

Optionally, in an embodiment of the present disclosure, the excluding candidate resources from the candidate resource set for the sidelink communication of the second radio access technology based on the channel sensing result of the sidelink communication of the first radio access technology includes: determining time/frequency resources indicated in the SCI for the sidelink communication of the first radio access technology received in the channel sensing or reserved time/frequency resources based on the channel sensing result of the sidelink communication of the first radio access technology; and excluding candidate resources overlapping with the time/frequency resources indicated in the SCI or the reserved time/frequency resources from the candidate resource set for the sidelink communication of the second radio access technology.

For example, the UE determines the to-be-occupied time/frequency resources indicated in the SCI for the LTE sidelink communication received in the channel sensing based on the channel sensing result of the LTE sidelink communication, and in a case that the time/frequency resources overlap with the candidate resource set for the NR sidelink communication, excludes time/frequency resources overlapping with the time/frequency resources indicated in the SCI from the candidate resource set for the NR sidelink communication.

For example, the UE determines the time/frequency resources to be reserved for the LTE sidelink communication received in the channel sensing based on the channel sensing result of the LTE sidelink communication, and in a case that the time/frequency resources overlap with the candidate resource set for the NR sidelink communication, excludes time/frequency resources overlapping with the time/frequency resources indicated in the SCI from the candidate resource set for the NR sidelink communication.

Optionally, the excluding the candidate resources overlapping with the time/frequency resources indicated in the SCI or the reserved time/frequency resources from the candidate resource set for the sidelink communication of the second radio access technology includes: determining an S-RSRP measurement value and/or an S-RSSI measurement value associated with the SCI; and excluding a second candidate resource from the candidate resource set for the sidelink communication of the second radio access technology. The second candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a fifth threshold.

For example, the UE determines the time/frequency resources indicated in the SCI for the LTE sidelink communication received in the channel sensing or the reserved time/frequency resources based on the channel sensing result of the LTE sidelink communication, determines the S-RSRP measurement value associated with the SCI for the LTE sidelink communication, and in a case that the time/frequency resources overlap with the candidate resource set for the NR sidelink communication and the S-RSRP measurement value is greater than or equal to the fifth threshold, excludes time/frequency resources overlapping with the time/frequency resources indicated in the SCI or the reserved time/frequency resources from the candidate resource set for the NR sidelink communication.

For another example, the UE determines the time/frequency resources indicated in the SCI for the LTE sidelink communication received in the channel sensing or the reserved time/frequency resources based on the channel sensing result of the LTE sidelink communication, determines the S-RSSI measurement value associated with the SCI for the LTE sidelink communication, and in a case that the time/frequency resources overlap with the candidate resource set for the NR sidelink communication and the S-RSSI measurement value is greater than or equal to the fifth threshold, excludes time/frequency resources overlapping with the time/frequency resources indicated in the SCI or the reserved time/frequency resources from the candidate resource set for the NR sidelink communication.

For yet another example, the UE determines the time/frequency resources indicated in the SCI for the LTE sidelink communication received in the channel sensing or the reserved time/frequency resources based on the channel sensing result of the LTE sidelink communication, determines the S-RSRP measurement value and the S-RSSI measurement value associated with the SCI for the LTE sidelink communication, and in a case that the time/frequency resources overlap with the candidate resource set for the NR sidelink communication and each of the S-RSRP measurement value and the S-RSSI measurement value is greater than or equal to the fifth threshold, excludes time/frequency resources overlapping with the time/frequency resources indicated in the SCI or the reserved time/frequency resources from the candidate resource set for the NR sidelink communication.

Optionally, there is a mapping relation between the fifth threshold and each of a priority level of the sidelink communication of the first radio access technology and a priority level of the inter-UE coordination for the sidelink communication of the second radio access technology indicated in the SCI; and/or the fifth threshold is configured independent of a sixth threshold or preconfigured, and the sixth threshold is a threshold used for excluding candidate resources based on a channel sensing result of the sidelink communication of the second radio access technology.

In embodiments of the present disclosure, a specific implementation mode for excluding the candidate resources based on the channel sensing result of the NR sidelink communication is identical to the implementation mode for excluding the candidate resources from the candidate resource set for the NR sidelink communication based on the channel sensing result of the LTE sidelink communication, which will not be particularly defined herein again.

For example, the fifth threshold is set based on channel state information about a channel. The fifth threshold needs to be set in such a manner that a signal whose power is greater than or equal to the fifth threshold is transmitted normally through the channel. In addition, the fifth threshold needs to be smaller than the sixth threshold used for excluding the candidate resource based on the channel sensing result of the NR sidelink communication, so as to ensure that the priority level of the LTE sidelink communication is greater than or equal to the priority level of the NR sidelink communication.

For another example, the fifth threshold needs to be set in such a manner that a signal whose power is greater than or equal to the fifth threshold is transmitted normally through the channel. In addition, the fifth threshold needs to be smaller than the sixth threshold used for excluding the candidate resource based on the channel sensing result of the NR sidelink communication. The fifth threshold and the sixth threshold are configured independent of each other or preconfigured based on the channel state information about the channel and the above-mentioned relationship.

For yet another example, the fifth threshold and the sixth threshold are configured independent of each other or preconfigured based on an actual situation.

According to embodiments of the present disclosure, the UE determines whether or not to perform the resource reselection for the NR sidelink communication based on the channel sensing result of the LTE Side link communication, and excludes the candidate resources from the candidate resource set, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

FIG. 8 is a flow chart of a sidelink communication coexistence method for multiple radio access technologies. This method is performed by a UE for a sidelink communication of a second radio access technology. As shown in FIG. 8, the method includes, but not limited to, the following steps.

Step S801: a channel sensing is performed on a sidelink communication of a first radio access technology.

In the embodiments of the present disclosure, Step S801 may be implemented by using any of the embodiments of the present disclosure, which is not limited in the embodiments of the disclosure, wherein details will not be particularly defined herein again.

Step S802: in a case that an inter-UE coordination is performed, auxiliary resource set information in inter-UE coordination information is determined based on the channel sensing result of the sidelink communication of the first radio access technology.

In the embodiments of the present disclosure, Step S802 may be implemented by using any of the embodiments of the present disclosure, which is not limited in the embodiments of the disclosure, wherein details will not be particularly defined herein again.

Step S803: resources in an unrecommended resource set is determined from the candidate resource set for the sidelink communication of the second radio access technology based on the channel sensing result of the sidelink communication of the first radio access technology.

Optionally, in an embodiment of the present disclosure, the determining the resources in the unrecommended resource set from the candidate resource set for the sidelink communication of the second radio access technology based on the channel sensing result of the sidelink communication of the first radio access technology includes: determining time/frequency resources indicated in the SCI for the sidelink communication of the first radio access technology received in the channel sensing or reserved time/frequency resources based on the channel sensing result of the sidelink communication of the first radio access technology; and determining a third candidate resource in the candidate resource set for the sidelink communication of the second radio access technology as a resource in the unrecommended resource set. The third candidate resource is a candidate resource overlapping with the time/frequency resources indicated in the SCI or the reserved time/frequency resources.

For example, the UE determines the time/frequency resources indicated in the SCI for the LTE sidelink communication received in the channel sensing based on the channel sensing result of the LTE sidelink communication, and in a case that the time/frequency resources overlap with the candidate resource set for the NR sidelink communication, determines the time/frequency resources overlapping with the time/frequency resources indicated in the SCI or the reserved time/frequency resources as the resources in the unrecommended resource set.

For example, the UE determines the reserved time/frequency resources for the LTE sidelink communication received in the channel sensing based on the channel sensing result of the LTE sidelink communication, and in a case that the time/frequency resources overlap with the candidate resource set for the NR sidelink communication, determines the time/frequency resources overlapping with the time/frequency resources indicated in the SCI or the reserved time/frequency resources as the resources in the unrecommended resource set.

Optionally, the determining the third candidate resource in the candidate resource set for the sidelink communication of the second radio access technology as the resource in the unrecommended resource set includes: determining an S-RSRP measurement value and/or an S-RSSI measurement value associated with the SCI; and determining a fourth candidate resource in the candidate resource set for the sidelink communication of the second radio access technology as the resource in the unrecommended resource set. The fourth candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a seventh threshold.

For example, the UE determines the time/frequency resources indicated in the SCI for the LTE sidelink communication received in the channel sensing or the reserved time/frequency resources based on the LTE sidelink communication, determines the S-RSRP measurement value associated with the SCI for the LTE sidelink communication, and in a case that the time/frequency resources overlap with the candidate resource set for the NR sidelink communication and the S-RSRP measurement value is greater than or equal to the seventh threshold, determines the time/frequency resources overlapping with the time/frequency resources indicated in the SCI or the reserved time/frequency resources as the resources in the unrecommended resource set.

For example, the UE determines the time/frequency resources indicated in the SCI for the LTE sidelink communication received in the channel sensing or the reserved time/frequency resources based on the LTE sidelink communication, determines the S-RSSI measurement value associated with the SCI for the LTE sidelink communication, and in a case that the time/frequency resources overlap with the candidate resource set for the NR sidelink communication and the S-RSSI measurement value is greater than or equal to the seventh threshold, determines the time/frequency resources overlapping with the time/frequency resources indicated in the SCI or the reserved time/frequency resources as the resources in the unrecommended resource set.

For yet another example, the UE determines the time/frequency resources indicated in the SCI for the LTE sidelink communication received in the channel sensing or the reserved time/frequency resources based on the LTE sidelink communication, determines the S-RSRP measurement value and the S-RSSI measurement value associated with the SCI for the LTE sidelink communication, and in a case that the time/frequency resources overlap with the candidate resource set for the NR sidelink communication and each of the S-RSRP measurement value and the S-RSSI measurement value is greater than or equal to the seventh threshold, determines the time/frequency resources overlapping with the time/frequency resources indicated in the SCI or the reserved time/frequency resources as the resources in the unrecommended resource set.

Optionally, there is a mapping relation between the seventh threshold and each of a priority level of the sidelink communication of the first radio access technology and a priority level of the inter-UE coordination for the sidelink communication of the second radio access technology indicated in the SCI; and/or the seventh threshold is configured independent of an eighth threshold or preconfigured, and the eighth threshold is a threshold used for determining the resource in the unrecommended resource set based on a channel sensing result of the sidelink communication of the second radio access technology.

In embodiments of the present disclosure, a specific implementation mode for determining the resources in the unrecommended resource set based on the channel sensing result of the NR sidelink communication is identical to the implementation mode for determining the resources in the unrecommended candidate resource set from the candidate resource set for the NR sidelink communication based on the channel sensing result of the LTE sidelink communication, which will not be particularly defined herein again.

For example, the seventh threshold is set based on channel state information about a channel. The seventh threshold needs to be set in such a manner that a signal whose power is greater than or equal to the seventh threshold is transmitted normally through the channel. In addition, the seventh threshold needs to be smaller than the eighth threshold used for excluding the candidate resource based on the channel sensing result of the NR sidelink communication, so as to ensure that the priority level of the LTE sidelink communication is greater than or equal to the priority level of the NR sidelink communication.

For another example, the seventh threshold needs to be set in such a manner that a signal whose power is greater than or equal to the seventh threshold is transmitted normally through the channel. In addition, the seventh threshold needs to be smaller than the eighth threshold used for excluding the candidate resource based on the channel sensing result of the NR sidelink communication. The seventh threshold and the eighth threshold are configured independent of each other or preconfigured based on the channel state information about the channel and the above-mentioned relationship.

For yet another example, the seventh threshold and the eighth threshold are configured independent of each other or preconfigured based on an actual situation.

It should be appreciated that, in embodiments of the present disclosure, in order to ensure that the priority level of the LTE sidelink communication is greater than or equal to the that of the NR sidelink communication, the seventh threshold needs to be smaller than the eighth threshold used for excluding the candidate resources based on the channel sensing result of the NR sidelink communication. In some embodiments of the present disclosure, the priority level of the NR sidelink communication is configured to be greater than or equal to that of the LTE sidelink communication based on an actual situation. In this implementation mode, the seventh threshold needs to be greater than or equal to the eighth threshold used for excluding the candidate resource based on the channel sensing result of the NR sidelink communication.

According to embodiments of the present disclosure, the UE determines whether or not to perform the resource reselection for the NR sidelink communication based on the channel sensing result of the LTE sidelink communication, and determines the resource in the unrecommended resource set in the candidate resource set, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

The method has been described hereinabove from the perspective of the UE, and the sidelink communication coexistence method for multiple radio access technologies will be described hereinafter from the perspective of the network side device.

FIG. 9 is a flow chart of a sidelink communication coexistence method for multiple radio access technologies. This method is performed by a UE for a sidelink communication of a second radio access technology. As shown in FIG. 9, the method includes, but not limited to, the following steps.

Step S901: configuration information is transmitted to a UE.

In embodiments of the present disclosure, the UE is a UE using a sidelink communication of a second radio access technology, the configuration information includes a threshold configured for the UE, and the threshold is a threshold used by the UE for executing a procedure of the sidelink communication of the second radio access technology based on a channel sensing result of a sidelink communication of a first radio access technology.

The procedure includes at least one of: a resource selection or a resource re-selection; a transmission of a sidelink physical channel; a re-evaluation of a to-be-transmitted resource; an evaluation of a preemption of the to-be-transmitted resource; or a determination of auxiliary resource set information in inter-UE coordination information.

According to embodiments of the present disclosure, the network side device transmits the configuration information to the UE, so that the UE executes the procedure of the sidelink communication of the second radio access technology based on the configuration information and the channel sensing result of the sidelink communication of the first radio access technology, so as to enable the sidelink communication of the second radio access technology to avoid the reserved resources for the sidelink communication of the first radio access technology, prevent the occurrence of transmission resource collision, enable the LTE sidelink and the NR sidelink to dynamically share transmission resources on the same carrier frequency, and improve the use efficiency of the transmission resources.

The method has been described hereinabove from the perspectives of the UE and the network side device. In order to achieve various functions in the method in the embodiments of the present disclosure, the network side device and the UE may include a hardware structure and a software module, so as to achieve the above-mentioned functions in the form of the hardware structure, the software module, or a combination thereof. A certain function in these functions may be achieved in the form of the hardware structure, the software module, or a combination thereof.

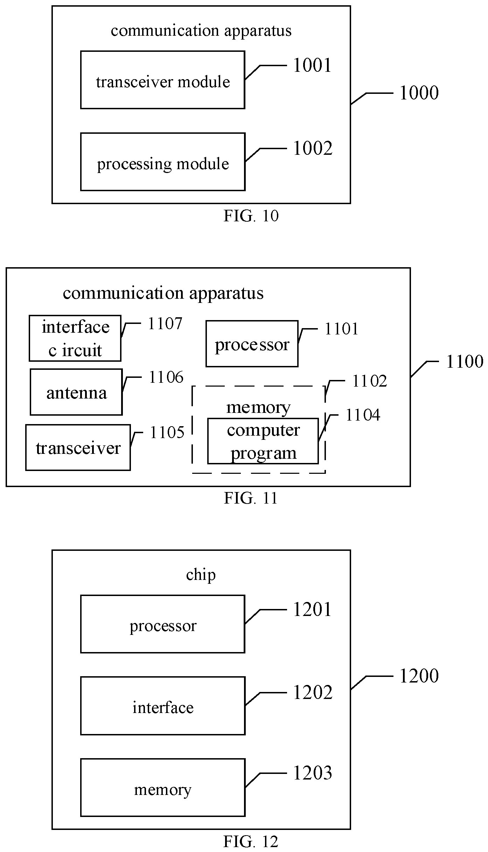

FIG. 10 is a schematic view showing a communication apparatus 1000 according to an embodiment of the present disclosure. The communication apparatus 1000 in FIG. 10 includes a transceiver module 1001 and a processing module 1002. The transceiver module includes a transmission module and/or a reception module, the transmission module is configured to achieve a transmission function, the reception module is configured to achieve a reception function, and the transceiver module 1401 is configured to achieve the transmission function and/or the reception function.

The communication apparatus 1000 may be a UE, an apparatus in the UE, or an apparatus capable of being used in combination with the UE. Alternatively, the communication apparatus 1000 may be a network side device, an apparatus in the network side device, or an apparatus capable of being used in combination with the network side device.

In a case that the communication apparatus 1000 is the UE, the transceiver module 1001 is configured to perform a channel sensing on a sidelink communication of a first radio access technology. The processing module 1002 is configured to execute a procedure of the sidelink communication of the second radio access technology based on a channel sensing result of the sidelink communication of the first radio access technology. The procedure includes at least one of: a resource selection or a resource re-selection; a transmission of a sidelink physical channel; a re-evaluation of a to-be-transmitted resource; an evaluation of a preemption of the to-be-transmitted resource; or a determination of auxiliary resource set information in inter-UE coordination information.

In an embodiment of the present disclosure, the first radio access technology is an LTE radio access technology, and the second radio access technology is an NR radio access technology.

In an embodiment of the present disclosure, the transceiver module 1001 is specifically configured to: receive a PSCCH for the sidelink communication of the first radio access technology; or determine an S-RSRP measurement value and/or an S-RSSI measurement value corresponding to SCI in the PSCCH for the sidelink communication of the first radio access technology.

In an embodiment of the present disclosure, the transceiver module 1001 is specifically configured to perform the channel sensing in a resource pool for the sidelink communication of the first radio access technology, time/frequency resources in the resource pool for the sidelink communication of the first radio access technology overlap with time/frequency resources in a resource pool for the sidelink communication of the second radio access technology, the resource pool for the sidelink communication of the first radio access technology includes the time/frequency resources for the sidelink communication of the first radio access technology, and the resource pool for the sidelink communication of the second radio access technology includes the time/frequency resources for the sidelink communication of the second radio access technology.

In an embodiment of the present disclosure, the processing module 1002 is specifically configured to, in a case that the resource selection or the resource re-selection of the sidelink communication of the second radio access technology is performed, exclude candidate resources from a candidate resource set for the sidelink communication of the second radio access technology based on the channel sensing result of the sidelink communication of the first radio access technology.

In an embodiment of the present disclosure, the processing module 1002 is specifically configured to: determine time/frequency resources indicated in the SCI for the sidelink communication of the first radio access technology received in the channel sensing or reserved time/frequency resources based on the channel sensing result of the sidelink communication of the first radio access technology; and exclude candidate resources overlapping with the time/frequency resources indicated in the SCI or the reserved time/frequency resources from the candidate resource set for the sidelink communication of the second radio access technology.

In an embodiment of the present disclosure, the processing module 1002 is specifically configured to: determine an S-RSRP measurement value and/or an S-RSSI measurement value associated with the SCI; and exclude a first candidate resource from the candidate resource set for the sidelink communication of the second radio access technology. The first candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a first threshold.

In an embodiment of the present disclosure, there is a mapping relation between the first threshold and each of a priority level of the sidelink communication of the first radio access technology and a priority level of the sidelink communication of the second radio access technology indicated in the SCI; and/or the first threshold is configured independent of a second threshold or preconfigured. The second threshold is a threshold used for excluding candidate resources based on a channel sensing result of the sidelink communication of the second radio access technology.

In an embodiment of the present disclosure, the processing module 1002 is specifically configured to, in a case that the transmission of the sidelink physical channel for the sidelink communication of the second radio access technology is performed, determine whether or not to transmit the sidelink physical channel for the sidelink communication of the second radio access technology based on the channel sensing result of the sidelink communication of the first radio access technology.

In an embodiment of the present disclosure, the processing module 1002 is specifically configured to: determine time/frequency resources indicated in the SCI for the sidelink communication of the first radio access technology received in the channel sensing or reserved time/frequency resources based on the channel sensing result of the sidelink communication of the first radio access technology; cancel the transmission of the sidelink physical channel for the sidelink communication of the second radio access technology, the time/frequency resources indicated in the SCI or the reserved time/frequency resources overlapping with time/frequency resources used by a to-be-transmitted sidelink physical channel for the sidelink communication of the second radio access technology; or transmit the sidelink physical channel for the sidelink communication of the second radio access technology, the time/frequency resources indicated in the SCI or the reserved time/frequency resources not overlapping with the time/frequency resources used by the to-be-transmitted sidelink physical channel for the sidelink communication of the second radio access technology.

In an embodiment of the present disclosure, the processing module 1002 is specifically configured to: determine an S-RSRP measurement value and/or an S-RSSI measurement value associated with the SCI; in a case that the time/frequency resources indicated in the SCI or the reserved time/frequency resources overlap with the time/frequency resources used by the to-be-transmitted sidelink physical channel for the sidelink communication of the second radio access technology and the S-RSRP measurement value and/or the S-RSSI measurement value associated with the SCI are greater than or equal to a third threshold, cancel the transmission of the sidelink physical channel for the sidelink communication of the second radio access technology; or in a case that the time/frequency resources indicated in the SCI or the reserved time/frequency resources do not overlap with the time/frequency resources used by the to-be-transmitted sidelink physical channel for the sidelink communication of the second radio access technology and/or the S-RSRP measurement value and/or the S-RSSI measurement value associated with the SCI are smaller than the third threshold, transmit the sidelink physical channel for the sidelink communication of the second radio access technology.

In an embodiment of the present disclosure, there is mapping relation between the third threshold and each of a priority level of the sidelink communication of the first radio access technology and a priority level of the sidelink communication of the second radio access technology indicated in the SCI.

In an embodiment of the present disclosure, the processing module 1002 is specifically configured to, in a case that the re-evaluation and/or the evaluation of the preemption of the to-be-transmitted resource for the sidelink communication of the second radio access technology are performed, determine whether or not the resource reselection for the sidelink communication of the second radio access technology is to be performed based on the channel sensing result of the sidelink communication of the first radio access technology.

In an embodiment of the present disclosure, the processing module 1002 is specifically configured to: determine time/frequency resources indicated in the SCI for the first radio access technology sidelink communication received in the channel sensing or reserved time/frequency resources based on the channel sensing result of the sidelink communication of the first radio access technology; perform the resource reselection on a PSCCH/a PSSCH for the sidelink communication of the second radio access technology transmitted using the to-be-transmitted resource, the time/frequency resources indicated in the SCI or the reserved time/frequency resources overlapping with the to-be-transmitted resource; or perform transmission of a sidelink of the second radio access technology using the to-be-transmitted resource, the time/frequency resources indicated in the SCI or the reserved time/frequency resources not overlapping with the to-be-transmitted resource.

In an embodiment of the present disclosure, the processing module 1002 is specifically configured to: determine an S-RSRP measurement value and/or an S-RSSI measurement value associated with the SCI; in a case that the time/frequency resources indicated in the SCI or the reserved time/frequency resources overlap with the to-be-transmitted resource and the S-RSRP measurement value and/or the S-RSSI measurement value associated with the SCI are greater than or equal to a fourth threshold, perform the resource reselection on the PSCCH/PSSCH for the sidelink communication of the second radio access technology transmitted using the to-be-transmitted resource; or in a case that the time/frequency resources indicated in the SCI or the reserved time/frequency resources do not overlap with the to-be-transmitted resource and/or the S-RSRP measurement value and/or the S-RSSI measurement value associated with the SCI are smaller than the fourth threshold, perform transmission of the second radio access technology sidelink using the to-be-transmitted resource.

In an embodiment of the present disclosure, there is a mapping relation between the fourth threshold and each of a priority level of the sidelink communication of the first radio access technology and a priority level of the transmission of the PSCCH/PSSCH for the sidelink communication of the second radio access technology indicated in the SCI.

In an embodiment of the present disclosure, the processing module 1002 is specifically configured to, in a case that an inter-UE coordination is performed, determine auxiliary resource set information in inter-UE coordination information based on the channel sensing result of the sidelink communication of the first radio access technology.

In an embodiment of the present disclosure, the processing module 1002 is further configured to exclude candidate resources from a candidate resource set for the sidelink communication of the second radio access technology based on the channel sensing result of the sidelink communication of the first radio access technology.

In an embodiment of the present disclosure, the processing module 1002 is specifically configured to: determine time/frequency resources indicated in the SCI for the sidelink communication of the first radio access technology received in the channel sensing or reserved time/frequency resources based on the channel sensing result of the sidelink communication of the first radio access technology; and exclude candidate resources overlapping with the time/frequency resources indicated in the SCI or the reserved time/frequency resources from the candidate resource set for the sidelink communication of the second radio access technology.

In an embodiment of the present disclosure, the processing module 1002 is specifically configured to: determine an S-RSRP measurement value and/or an S-RSSI measurement value associated with the SCI; and exclude a second candidate resource from the candidate resource set for the sidelink communication of the second radio access technology. The second candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a fifth threshold.

In an embodiment of the present disclosure, there is a mapping relation between the fifth threshold and each of a priority level of the sidelink communication of the first radio access technology and a priority level of the inter-UE coordination for the sidelink communication of the second radio access technology indicated in the SCI; and/or the fifth threshold is configured independent of a sixth threshold or preconfigured, and the sixth threshold is a threshold used for excluding candidate resources based on a channel sensing result of the sidelink communication of the second radio access technology.

In an embodiment of the present disclosure, the auxiliary resource set information includes an unrecommended resource set, and the processing module 1002 is further configured to determine resources in the unrecommended resource set from the candidate resource set for the sidelink communication of the second radio access technology based on the channel sensing result of the sidelink communication of the first radio access technology.

In an embodiment of the present disclosure, the processing module 1002 is specifically configured to: determine time/frequency resources indicated in the SCI for the sidelink communication of the first radio access technology received in the channel sensing or reserved time/frequency resources based on the channel sensing result of the sidelink communication of the first radio access technology; and determine a third candidate resource in the candidate resource set for the sidelink communication of the second radio access technology as a resource in the unrecommended resource set. The third candidate resource is a candidate resource overlapping with the time/frequency resources indicated in the SCI or the reserved time/frequency resources.

In an embodiment of the present disclosure, the processing module 1002 is specifically configured to: determine an S-RSRP measurement value and/or an S-RSSI measurement value associated with the SCI; and determine a fourth candidate resource in the candidate resource set for the sidelink communication of the second radio access technology as the resource in the unrecommended resource set. The fourth candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a seventh threshold.

In an embodiment of the present disclosure, there is a mapping relation between the seventh threshold and each of a priority level of the sidelink communication of the first radio access technology and a priority level of the inter-UE coordination for the sidelink communication of the second radio access technology indicated in the SCI; and/or the seventh threshold is configured independent of an eighth threshold or preconfigured, and the eighth threshold is a threshold used for determining the resource in the unrecommended resource set based on a channel sensing result of the sidelink communication of the second radio access technology.

According to the communication apparatus in the embodiments of the present disclosure, the UE executes the procedure of the NR sidelink communication based on the channel sensing result of the LTE sidelink communication, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

In a case that the communication apparatus 1000 is the network side device, the transceiver module 1001 is configured to transmit configuration information to a UE. The UE is a UE using a sidelink communication of a second radio access technology, the configuration information includes a threshold configured for the UE, and the threshold is a threshold used by the UE for executing a procedure of the sidelink communication of the second radio access technology based on a channel sensing result of a sidelink communication of a first radio access technology. The procedure includes at least one of: a resource selection or a resource re-selection; a transmission of a sidelink physical channel; a re-evaluation of a to-be-transmitted resource; an evaluation of a preemption of the to-be-transmitted resource; or a determination of auxiliary resource set information in inter-UE coordination information.

According to the communication apparatus in the embodiments of the present disclosure, the network side device transmits the configuration information to the UE, so that the UE executes the procedure of the NR sidelink communication based on the configuration information and the channel sensing result of the LTE sidelink communication, so as to enable the NR sidelink communication to avoid the LTE sidelink communication, prevent the occurrence of transmission resource collision, enable the LTE sidelink and the NR sidelink to dynamically share transmission resources on the same carrier frequency, and improve the use efficiency of the transmission resources.

FIG. 11 is a schematic view showing a communication apparatus 1100 according to an embodiment of the present disclosure. The communication apparatus 1100 may be a network side device, a UE, or a chip, a chip system or a processor which supports the network side device to achieve the above-mentioned method, or a chip, a chip system or a processor which supports the UE to achieve the above-mentioned method. The apparatus is used to achieve the above-mentioned method, which will not be particularly defined herein again.

The communication apparatus 1100 may include one or more processors 1101. The processor 1101 may be a general-purpose processor or special-purpose processor, e.g., a baseband processor or a Central Processing Unit (CPU). The baseband processor is configured to process a communication protocol as well as communication data, and the CPU is configured to control the communication apparatus (e.g., a network side device, a baseband chip, a UE, a UE chip, a Distributed Unit (DU) or a Centralized Unit (CU)), execute a computer program, and process data in the computer program.

Optionally, the communication apparatus 1100 further includes one or more memories 1102 storing therein a computer program 1104. The computer program 1104 is executed by the processor 1101, so that the communication apparatus 1100 executes the above-mentioned method. Optionally, the memory 1102 further stores therein data. The communication apparatus 1100 is arranged independent of, or integrated with, the memory 1102.

Optionally, the communication apparatus 1100 further includes a transceiver 1105 and an antenna 1106. The transceiver 1105 is also called as a transceiver unit, a transceiver machine or a transceiver circuit, and it is configured to achieve a transmission function and a reception function. The transceiver 1105 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus 1100 further includes one or more interface circuits 1107. The interface circuit 1107 is configured to receive a code instruction and transmit it to the processor 1101. The processor 1101 executes the code instruction, so that the communication apparatus 1100 implements the above-mentioned method.

The communication apparatus 1100 is a UE, and the processor 1101 is configured to execute Step S202 in FIG. 2, Step S302 in FIG. 3, Step S402 in FIG. 4, Step S502 in FIG. 5, Step S602 in FIG. 6, Steps S702 and S703 in FIG. 7, or Steps S302 and S803 in FIG. 8. The transceiver 1105 is configured to execute Step S201 in FIG. 2, Steps S301 in FIG.3, Step S402 in FIG. 4, Step S501 in FIG. 5, Step S602 in FIG. 6, Step S701 in FIG. 7, or Step S801 in FIG. 8.

The communication apparatus 1100 is a network side device, and the transceiver 1105 is configured to perform Step S901 in FIG. 9.

In an embodiment of the present disclosure, the processor 1101 may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

In an embodiment of the present disclosure, the processor 1101 stores therein a computer program 1103, and the computer program 1103 is executed by the processor 1101, so that the communication apparatus 1100 implements the above-mentioned method. The computer program 1103 may be programmed in the processor 1101, and in this case, the processor 1101 may be implemented through hardware.

In an embodiment of the present disclosure, the communication apparatus 1100 includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network side device or a UE, but the scope of the communication apparatus is not limited thereto. In addition, a structure of the communication apparatus may not be limited by FIG. 11. The communication apparatus may be an independent device, or a part of a large device. For example, the communication apparatus may be:
(1) an independent IC, chip, chip system or chip sub-system;
(2) a set of one or more ICs (optionally, the IC set also includes a memory member for storing therein data and a computer program;
(3) an ASIC, e.g., a Modem;
(4) a module capable of being embedded into the other device;
(5) a receiver, a terminal, a smart terminal, a cellular phone, a wireless device, a handheld device, a mobile unit, a vehicle-mounted device, a network device, a cloud device, an artificial intelligence device, etc.; or
(6) the other device.

In a case that the communication apparatus is a chip or a chip system, as shown in FIG. 12, the chip includes a processor 1201 and an interface 1202. There may exist one or more processors 1201, and one or more interfaces 1202.

The chip is used to achieve a part of, or all of, the functions of the UE in the embodiments of the present disclosure. For example, the chip has the functions of the UE in a part of, or all of, the embodiments of the present disclosure, or has the function in any individual embodiment of the present disclosure. Alternatively, the chip is used to achieve a part of, or all of, the functions of the network side device in the embodiments of the present disclosure. For example, the chip has the functions of the network side device in a part of, or all of, the embodiments of the present disclosure, or has the function in any individual embodiment of the present disclosure.

Optionally, the chip further includes a memory 1203 for storing therein necessary computer programs and data.

It should be appreciated that, various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a sidelink communication coexistence system for multiple radio access technologies. The system includes the communication apparatus serving as a UE and the communication apparatus serving as a network side device in FIG. 10, or includes the communication apparatus serving as a UE and the communication apparatus serving as a network side device in FIG. 11.

The present disclosure further provides in some embodiments a readable storage medium storing therein instructions. The instructions are executed by a computer so as to achieve the functions in any of the above-mentioned method embodiments.

The present disclosure further provides in some embodiments a computer program product. The computer program product is executed by a computer so as to achieve the functions in any of the above-mentioned method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a coaxial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of the same kind, the words "first", "second", "third", "A", "B", "C" and "D" are used to differentiate these technical features, without indicating any sequence or sizes thereof.

The correspondence shown in each table in the present disclosure may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the present disclosure, correspondences shown in some rows may not be configured. For another example, appropriate deformation or adjustment may be performed based on the table, e.g., splitting or combination. A name of each parameter in each table may use the other name capable of being understood by the communication apparatus, and a value of the parameter or a presentation mode thereof may also use that capable of being understood by the communication apparatus. During the implementation of each table, the other data structure may also be used, e.g., array, queue, container, stack, linear table, pointer, linked list, tree, map, structure, class, heap, or hash table.

The term "predefined" in the embodiments of the present disclosure may be understood as "defined", "defined in advance", "stored", "pre-stored", "pre-negotiated", "preconfigured", "programmed" or "pre-programed".

It should be appreciated that, units and algorithm steps for instances described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, device and units described hereinabove may refer to the corresponding procedures in the method embodiments, and thus will not be particularly defined herein.

The above embodiments are merely for illustrative purposes, but shall not be construed as limiting the scope of the present disclosure. Any person skilled in the art may make modifications and substitutions without departing from the spirit of the present disclosure, and these modifications and substitutions shall also fall within the scope of the present disclosure. Hence, the scope of the present disclosure shall be subject to the scope defined by the appended claims.

## Claims

1. A sidelink communication coexistence method for multiple radio access technologies, performed by a User Equipment (UE) for a sidelink communication of a second radio access technology, comprising:
performing a channel sensing on a sidelink communication of a first radio access technology; and
executing a procedure of the sidelink communication of the second radio access technology based on a channel sensing result of the sidelink communication of the first radio access technology,
wherein the procedure comprises at least one of:
a resource selection or a resource re-selection;
a transmission of a sidelink physical channel;
a re-evaluation of a to-be-transmitted resource;
an evaluation of preemption of the to-be-transmitted resource; or
a determination of auxiliary resource set information in inter-UE coordination information.

2. The sidelink communication coexistence method of claim 1, wherein the first radio access technology is a Long Term Evolution (LTE) radio access technology, and the second radio access technology is a New Radio (NR) radio access technology.

3. The sidelink communication coexistence method of claim 1 or 2, wherein performing the channel sensing on the sidelink communication of the first radio access technology comprises at least one of:
receiving a Physical Sidelink Control Channel (PSCCH) for the sidelink communication of the first radio access technology; or
determining a Sidelink-Reference Signal Receiving Power (S-RSRP) measurement value and/or a Sidelink-Received Signal Strength Indicator (S-RSSI) measurement value corresponding to Sidelink Control Information (SCI) in the PSCCH for the sidelink communication of the first radio access technology.

4. The sidelink communication coexistence method of any one of claims 1 to 3, wherein performing the channel sensing on the sidelink communication of the first radio access technology comprises:
performing the channel sensing in a resource pool for the sidelink communication of the first radio access technology,
wherein time/frequency resources in the resource pool for the sidelink communication of the first radio access technology overlap with time/frequency resources in a resource pool for the sidelink communication of the second radio access technology, the resource pool for the sidelink communication of the first radio access technology comprises the time/frequency resources for the sidelink communication of the first radio access technology, and the resource pool for the sidelink communication of the second radio access technology comprises the time/frequency resources for the sidelink communication of the second radio access technology.

5. The sidelink communication coexistence method of any one of claims 1 to 4, wherein performing the procedure of the sidelink communication of the second radio access technology based on the channel sensing result of the sidelink communication of the first radio access technology comprises:
in a case that the resource selection or the resource re-selection of the sidelink communication of the second radio access technology is performed, excluding candidate resources from a candidate resource set for the sidelink communication of the second radio access technology based on the channel sensing result of the sidelink communication of the first radio access technology.

6. The sidelink communication coexistence method of claim 5, wherein excluding the candidate resource from the candidate resource set for the sidelink communication of the second radio access technology based on the channel sensing result of the sidelink communication of the first radio access technology comprises:
determining time/frequency resources indicated in the SCI for the sidelink communication of the first radio access technology received in the channel sensing or reserved time/frequency resources based on the channel sensing result of the sidelink communication of the first radio access technology; and
excluding candidate resources overlapping with the time/frequency resources indicated in the SCI or the reserved time/frequency resources from the candidate resource set for the sidelink communication of the second radio access technology.

7. The sidelink communication coexistence method of claim 6, wherein excluding candidate resources overlapping with the time/frequency resources indicated in the SCI or the reserved time/frequency resources from the candidate resource set for the sidelink communication of the second radio access technology comprises:
determining an S-RSRP measurement value and/or an S-RSSI measurement value associated with the SCI; and
excluding a first candidate resource from the candidate resource set for the sidelink communication of the second radio access technology, wherein the first candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a first threshold.

8. The sidelink communication coexistence method of claim 7, wherein there is a mapping relation between the first threshold and each of a priority level of the sidelink communication of the first radio access technology and a priority level of the sidelink communication of the second radio access technology indicated in the SCI; and/or
the first threshold is configured independent of a second threshold or preconfigured, wherein the second threshold is a threshold used for excluding candidate resources based on a channel sensing result of the sidelink communication of the second radio access technology.

9. The sidelink communication coexistence method of any one of claims 1 to 4, wherein performing the procedure of the sidelink communication of the second radio access technology based on the channel sensing result of the sidelink communication of the first radio access technology comprises:
in a case that the transmission of the sidelink physical channel for the sidelink communication of the second radio access technology is performed, determining whether or not to transmit the sidelink physical channel for the sidelink communication of the second radio access technology based on the channel sensing result of the sidelink communication of the first radio access technology.

10. The sidelink communication coexistence method of claim 9, wherein determining whether or not to transmit the sidelink physical channel for the sidelink communication of the second radio access technology based on the channel sensing result of the sidelink communication of the first radio access technology comprises:
determining time/frequency resources indicated in the SCI for the sidelink communication of the first radio access technology received in the channel sensing or reserved time/frequency resources based on the channel sensing result of the sidelink communication of the first radio access technology;
cancelling the transmission of the sidelink physical channel for the sidelink communication of the second radio access technology, wherein the time/frequency resources indicated in the SCI or the reserved time/frequency resources overlap with time/frequency resources used by a to-be-transmitted sidelink physical channel for the sidelink communication of the second radio access technology; or
transmitting the sidelink physical channel for the sidelink communication of the second radio access technology, wherein the time/frequency resources indicated in the SCI or the reserved time/frequency resources do not overlap with the time/frequency resources used by the to-be-transmitted sidelink physical channel for the sidelink communication of the second radio access technology.

11. The sidelink communication coexistence method of claim 10, wherein determining whether or not to transmit the sidelink physical channel for the sidelink communication of the second radio access technology based on the channel sensing result of the sidelink communication of the first radio access technology comprises:
determining an S-RSRP measurement value and/or an S-RSSI measurement value associated with the SCI;
in a case that the time/frequency resources indicated in the SCI or the reserved time/frequency resources overlap with the time/frequency resources used by the to-be-transmitted sidelink physical channel for the sidelink communication of the second radio access technology and the S-RSRP measurement value and/or the S-RSSI measurement value associated with the SCI are greater than or equal to a third threshold, cancelling the transmission of the sidelink physical channel for the sidelink communication of the second radio access technology; or
in a case that the time/frequency resources indicated in the SCI or the reserved time/frequency resources do not overlap with the time/frequency resources used by the to-be-transmitted sidelink physical channel for the sidelink communication of the second radio access technology and/or the S-RSRP measurement value and/or the S-RSSI measurement value associated with the SCI are smaller than the third threshold, transmitting the sidelink physical channel for the sidelink communication of the second radio access technology.

12. The sidelink communication coexistence method of claim 11, wherein there is mapping relation between the third threshold and each of a priority level of the sidelink communication of the first radio access technology and a priority level of the sidelink communication of the second radio access technology indicated in the SCI.

13. The sidelink communication coexistence method of any one of claims 1 to 4, wherein executing the procedure of the sidelink communication of the second radio access technology based on the channel sensing result of the sidelink communication of the first radio access technology comprises:
in a case that the re-evaluation and/or the evaluation of the preemption of the to-be-transmitted resource for the sidelink communication of the second radio access technology are performed, determining whether or not the resource reselection for the sidelink communication of the second radio access technology is to be performed based on the channel sensing result of the sidelink communication of the first radio access technology.

14. The sidelink communication coexistence method of claim 13, wherein determining whether or not the resource reselection for the sidelink communication of the second radio access technology is to be performed based on the channel sensing result of the sidelink communication of the first radio access technology comprises:
determining time/frequency resources indicated in the SCI for the first radio access technology sidelink communication received in the channel sensing or reserved time/frequency resources based on the channel sensing result of the sidelink communication of the first radio access technology;
performing the resource reselection on a PSCCH/a Physical Sidelink Shared Channel (PSSCH) for the sidelink communication of the second radio access technology transmitted using the to-be-transmitted resource, wherein the time/frequency resources indicated in the SCI or the reserved time/frequency resources overlap with the to-be-transmitted resource; or
performing transmission of a sidelink of the second radio access technology using the to-be-transmitted resource, wherein the time/frequency resources indicated in the SCI or the reserved time/frequency resources do not overlap with the to-be-transmitted resource.

15. The sidelink communication coexistence method of claim 14, wherein determining whether or not the resource reselection for the sidelink communication of the second radio access technology is to be performed based on the channel sensing result of the sidelink communication of the first radio access technology further comprises:
determining an S-RSRP measurement value and/or an S-RSSI measurement value associated with the SCI;
in a case that the time/frequency resources indicated in the SCI or the reserved time/frequency resources overlap with the to-be-transmitted resource and the S-RSRP measurement value and/or the S-RSSI measurement value associated with the SCI are greater than or equal to a fourth threshold, performing the resource reselection on the PSCCH/PSSCH for the sidelink communication of the second radio access technology transmitted using the to-be-transmitted resource; or
in a case that the time/frequency resources indicated in the SCI or the reserved time/frequency resources do not overlap with the to-be-transmitted resource and/or the S-RSRP measurement value and/or the S-RSSI measurement value associated with the SCI are smaller than the fourth threshold, performing transmission of the second radio access technology sidelink using the to-be-transmitted resource.

16. The sidelink communication coexistence method of claim 15, wherein there is a mapping relation between the fourth threshold and each of a priority level of the sidelink communication of the first radio access technology and a priority level of the transmission of the PSCCH/PSSCH for the sidelink communication of the second radio access technology indicated in the SCI.

17. The sidelink communication coexistence method of any one of claims 1 to 4, wherein executing the procedure of the sidelink communication of the second radio access technology based on the channel sensing result of the sidelink communication of the first radio access technology comprises:
in a case that an inter-UE coordination is performed, determining auxiliary resource set information in inter-UE coordination information based on the channel sensing result of the sidelink communication of the first radio access technology.

18. The sidelink communication coexistence method of claim 17, wherein the auxiliary resource set information comprises a recommended resource set, wherein the sidelink communication coexistence method further comprises:
excluding candidate resources from a candidate resource set for the sidelink communication of the second radio access technology based on the channel sensing result of the sidelink communication of the first radio access technology.

19. The sidelink communication coexistence method of claim 18, wherein excluding candidate resources from the candidate resource set for the sidelink communication of the second radio access technology based on the channel sensing result of the sidelink communication of the first radio access technology comprises:
determining time/frequency resources indicated in the SCI for the sidelink communication of the first radio access technology received in the channel sensing or reserved time/frequency resources based on the channel sensing result of the sidelink communication of the first radio access technology; and
excluding candidate resources overlapping with the time/frequency resources indicated in the SCI or the reserved time/frequency resources from the candidate resource set for the sidelink communication of the second radio access technology.

20. The sidelink communication coexistence method of claim 19, wherein excluding candidate resources overlapping with the time/frequency resources indicated in the SCI or the reserved time/frequency resources from the candidate resource set for the sidelink communication of the second radio access technology comprises:
determining an S-RSRP measurement value and/or an S-RSSI measurement value associated with the SCI; and
excluding a second candidate resource from the candidate resource set for the sidelink communication of the second radio access technology, wherein the second candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a fifth threshold.

21. The sidelink communication coexistence method of claim 20, wherein there is a mapping relation between the fifth threshold and each of a priority level of the sidelink communication of the first radio access technology and a priority level of the inter-UE coordination for the sidelink communication of the second radio access technology indicated in the SCI; and/or
the fifth threshold is configured independent of a sixth threshold or preconfigured, wherein the sixth threshold is a threshold used for excluding candidate resources based on a channel sensing result of the sidelink communication of the second radio access technology.

22. The sidelink communication coexistence method of claim 17, wherein the auxiliary resource set information comprises an unrecommended resource set, and the sidelink communication coexistence method further comprises:
determining resources in the unrecommended resource set from the candidate resource set for the sidelink communication of the second radio access technology based on the channel sensing result of the sidelink communication of the first radio access technology.

23. The sidelink communication coexistence method of claim 22, wherein determining the resources in the unrecommended resource set from the candidate resource set for the sidelink communication of the second radio access technology based on the channel sensing result of the sidelink communication of the first radio access technology comprises:
determining time/frequency resources indicated in the SCI for the sidelink communication of the first radio access technology received in the channel sensing or reserved time/frequency resources based on the channel sensing result of the sidelink communication of the first radio access technology; and
determining a third candidate resource in the candidate resource set for the sidelink communication of the second radio access technology as a resource in the unrecommended resource set, wherein the third candidate resource is a candidate resource overlapping the time/frequency resources indicated in the SCI or the reserved time/frequency resources.

24. The sidelink communication coexistence method of claim 23, wherein determining the third candidate resource in the candidate resource set for the sidelink communication of the second radio access technology as the resource in the unrecommended resource set comprises:
determining an S-RSRP measurement value and/or an S-RSSI measurement value associated with the SCI; and
determining a fourth candidate resource in the candidate resource set for the sidelink communication of the second radio access technology as the resource in the unrecommended resource set, wherein the fourth candidate resource is a candidate resource which overlaps with the time/frequency resources indicated in the SCI or the reserved time/frequency resources and in which the S-RSRP measurement value and/or the S-RSSI measurement value associated with the SCI are greater than or equal to a seventh threshold.

25. The sidelink communication coexistence method of claim 24, wherein there is a mapping relation between the seventh threshold and each of a priority level of the sidelink communication of the first radio access technology and a priority level of the inter-UE coordination for the sidelink communication of the second radio access technology indicated in the SCI; and/or
the seventh threshold is configured independent of an eighth threshold or preconfigured, wherein the eighth threshold is a threshold used for determining the resource in the unrecommended resource set based on a channel sensing result of the sidelink communication of the second radio access technology.

26. A sidelink communication coexistence method for multiple radio access technologies, performed by a network side device, comprising:
transmitting configuration information to a UE, wherein the UE is a UE using a sidelink communication of a second radio access technology, the configuration information comprises a threshold configured for the UE, and the threshold is a threshold used by the UE for executing a procedure of the sidelink communication of the second radio access technology based on a channel sensing result of a sidelink communication of a first radio access technology,
wherein the procedure comprises at least one of:
a resource selection or a resource re-selection;
a transmission of a sidelink physical channel;
a re-evaluation of a to-be-transmitted resource;
an evaluation of a preemption of the to-be-transmitted resource; or
a determination of auxiliary resource set information in inter-UE coordination information.

27. A communication apparatus, comprising:
a transceiver module configured to perform a channel sensing on a sidelink communication of a first radio access technology; and
a processing module configured to execute a procedure of the sidelink communication of the second radio access technology based on a channel sensing result of the sidelink communication of the first radio access technology,
wherein the procedure comprises at least one of:
a resource selection or a resource re-selection;
a transmission of a sidelink physical channel;
a re-evaluation of a to-be-transmitted resource;
an evaluation of a preemption of the to-be-transmitted resource; or
a determination of auxiliary resource set information in inter-UE coordination information.

28. A communication apparatus, comprising:
a transceiver module configured to transmit configuration information to a UE, wherein the UE is a UE using a sidelink communication of a second radio access technology, the configuration information comprises a threshold configured for the UE, and the threshold is a threshold used by the UE for executing a procedure of the sidelink communication of the second radio access technology based on a channel sensing result of a sidelink communication of a first radio access technology,
wherein the procedure comprises at least one of:
a resource selection or a resource re-selection;
a transmission of a sidelink physical channel;
a re-evaluation of a to-be-transmitted resource;
an evaluation of a preemption of the to-be-transmitted resource; or
a determination of auxiliary resource set information in inter-UE coordination information.

29. A communication apparatus, comprising a processor and a memory storing therein a computer program, wherein the processor is configured to execute the computer program in the memory, so as to implement the sidelink communication coexistence method of any one of claims 1 to 25.

30. A communication apparatus, comprising a processor and a memory storing therein a computer program, wherein the processor is configured to execute the computer program in the memory, so as to implement the sidelink communication coexistence method of claim 26.

31. A communication apparatus, comprising a processor and an interface circuit,
wherein the interface circuit is configured to receive a code instruction and transmit the code instruction to the processor, and
the processor is configured to execute the code instruction so as to implement the sidelink communication coexistence method of any one of claims 1 to 25.

32. A communication apparatus, comprising a processor and an interface circuit,
wherein the interface circuit is configured to receive a code instruction and transmit the code instruction to the processor, and
the processor is configured to execute the code instruction so as to implement the sidelink communication coexistence method of claim 26.

33. A computer-readable storage medium storing therein instructions, wherein, when the instruction are executed, the sidelink communication coexistence method of any one of claims 1 to 25 is implemented.

34. A computer-readable storage medium storing therein instructions, wherein, when the instructions are executed, the sidelink communication coexistence method of claim 26 is implemented.
